# EUROPEAN PATENT SPECIFICATION

(11) **EP 4 513 298 B1**
(45) Date of publication and mention of the grant of the patent: **13.05.2026**
(21) Application number: 24748243.3
(22) Date of filing: 03.07.2024
(51) Int. Cl.: G06F 1/16, H04M 1/02

(54) **FLEXIBLE ELECTRONIC DEVICE**
FLEXIBLE ELEKTRONISCHE VORRICHTUNG
DISPOSITIF ÉLECTRONIQUE SOUPLE

(30) Priority: 03.07.2023 KR 20230085836; 25.07.2023 KR 20230096849
(43) Date of publication of application: 26.02.2025
(73) Proprietor: Samsung Electronics Co., Ltd, Suwon-si, Gyeonggi-do 16677 (KR)
(72) Inventor: KIM, Dohyung, Suwon-si, Gyeonggi-do 16677 (KR); KIM, Junhyuk, Suwon-si, Gyeonggi-do 16677 (KR); LEE, Soyoung, Suwon-si, Gyeonggi-do 16677 (KR); LEE, Wonho, Suwon-si, Gyeonggi-do 16677 (KR); JANG, Seokmin, Suwon-si, Gyeonggi-do 16677 (KR)
(74) Representative: Gulde & Partner
(86) International application number: PCT/KR2024/009402
(87) International publication number: WO 2025/009887

(56) References cited:
- KR-A- 20220 008 732
- KR-A- 20220 061 798
- KR-A- 20230 039 862
- KR-A- 20230 094 027
- US-A1- 2020 201 394
- US-A1- 2022 232 716
- US-A1- 2023 007 796

## Description

### [Technical Field]

The invention relates to a flexible electronic device.

### [Background Art]

Electronic devices are gradually becoming slimmer, and improvements are being made to increase the rigidity, strengthen their design aspects, and differentiate their functional elements. Electronic devices are moving away from a uniform rectangular shape and are gradually being transformed into various shapes. Electronic devices may may have a deformable structure that is convenient to carry and allows for the use of a large screen display. Electronic devices may have a structure (e.g., a rollable structure or a slidable structure) that allows the display area of a flexible display (e.g., a rollable display) to be varied through the support of housings that slide relative to each other. Electronic devices with flexible displays are disclosed in US 2023 / 007796 A1 and US 2022 / 232716 A1.

The above information is presented as background information only to assist in an understanding of the present disclosure. No determination has been made, and no assertion is made, as to whether any of the above might be applicable as prior art with regard to the present disclosure.

### [Disclosure of Invention]

### [Technical Problem]

The electronic device includes a rollable electronic device (e.g., a slidable electronic device), in which the display area of the flexible display (e.g., a rollable display) can be expanded and/or reduced depending on the operating state. The rollable electronic device according to an embodiment includes a first housing (e.g., a first housing part, a frame cover) and a second housing (e.g., a second housing part, a front cover) that are movably coupled relative to each other in a manner that is at least partially fitted together. For example, the first housing and the second housing may be slidably operable relative to each other and may support at least a portion of a flexible display (e.g., a rollable display, an expandable display, or a stretchable display). The flexible display (e.g., the rollable display) may, in a slide-in state, be induced to have a first display area (e.g., a screen reduction) and, in a slide-out state, be induced to have a second display area (e.g., a screen enlargement) that is larger than the first display area.

The flexible electronic device (e.g., the rollable electronic device) may be subject to frequent slide-in and slide-out. The slide-in and slide-out of the flexible electronic device (e.g., the rollable electronic device) may cause the end (e.g., the longitudinal edge) of the flexible display (e.g., the rollable display) to be lifting -gaped.

Various embodiments of the present disclosure may provide a flexible electronic device (e.g., a rollable electronic device) capable of preventing a lifting from occurring at an end (e.g., a longitudinal edge) of the flexible display (e.g., a rollable display).

An electronic device according to claim 1 is provided according to the invention. Embodiments of the invention are presented in the dependent claims.

An electronic device according to an embodiment of the present disclosure includes: a housing including a first housing part and a second housing part slidably disposed with respect to the first housing part; a flexible display at least a portion of which can slide into an inner side of the housing or slide out of an inner side of the housing according to sliding of the second housing part; a support bar at least a portion of which supports an edge portion of the flexible display on an inner side of the housing; and a plate the first portion of which is coupled to the support bar and the second portion of which is coupled to at least a portion of the edge portion of the flexible display.

An electronic device according to an embodiment of the present disclosure includes: a housing including a first housing part and a second housing part slidably disposed with respect to the first housing part; a flexible display at least a portion of which can slide into an inner side of the housing or slide out of an inner side of the housing according to sliding of the second housing part; a support bar at least a portion of which supports the rear surface of an edge portion of the flexible display on an inner side of the housing; and a plate at least a portion of which is coupled to at least a portion of a front surface, which is opposite to the rear surface, of the edge portion of the flexible display.

An electronic device according to an embodiment of the present disclosure includes: a housing including a first housing part and a second housing part slidably disposed with respect to the first housing part; a flexible display at least a portion of which can slide into an inner side of the housing or slide out of an inner side of the housing according to sliding of the second part; a display support sheet including a first portion disposed on a rear surface of the flexible display and a second portion extending from the first portion but bending toward a front surface of the flexible display 1310 at least a portion of which is an opposite surface of the rear surface; a support bar at least a portion of which supports an edge portion of the flexible display on an inner side of the housing; and a plate coupled to the support bar and at least a portion of the edge portion of the flexible display. At least a portion of the second portion of the display support sheet may be adhered to at least a portion of the plate.

Electronic devices according to various embodiments of the present disclosure may prevent a flexible display (e.g., a rollable display) from lifting at an end (e.g., a longitudinal edge) of the flexible display.

In addition, various effects that can be directly or indirectly identified through this document may be provided.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

With regard to the description of the drawing, the same or similar reference numerals may be used for the same or similar components.
FIG. 1 is a block diagram of an electronic device in a network environment according to various embodiments of the present disclosure.
FIGS. 2a and 2b are diagrams illustrating the front and rear surfaces of an electronic device in a slide-in state according to various embodiments of the present disclosure.
FIGS. 2c and 2d are diagrams illustrating the front and rear surfaces of an electronic device in a slide-out state according to various embodiments of the present disclosure.
FIG. 3 is an exploded perspective view of an electronic device according to various embodiments of the present disclosure.
FIG. 4 is a configuration diagram of an electronic device in a slide-out state according to various embodiments of the present disclosure.
FIG. 5 is a configuration diagram of an electronic device in a slide-in state according to various embodiments of the present disclosure.
FIG. 6 is a diagram illustrating a stacked structure of a flexible display (e.g., a rollable display).
FIG. 7 is a diagram illustrating that the length of layers change and a repulsive force occurs due to the unfolding and bending of a flexible display (e.g., a rollable display).
FIG. 8 is a diagram illustrating a slide-in state of a flexible electronic device (e.g., a rollable electronic device).
FIG. 9 is a diagram illustrating a slide-out state of a flexible electronic device (e.g., a rollable electronic device).
FIG. 10 is a diagram illustrating a support member (e.g., a multi-bar) supporting a flexible display.
FIGS. 11 and 12 are diagrams illustrating that a lifting occurs at the edge (e.g., a longitudinal edge) of a flexible display (e.g., a rollable display) by the slide-in and slide-out of a flexible electronic device (e.g., a rollable electronic device).
FIG. 13 is a diagram of an electronic device according to an embodiment of the present disclosure, illustrating a support bar (e.g., an end-bar), a support plate (e.g., a fastening plate), and a tension belt of the electronic device.
FIG. 14 is a diagram illustrating a first side of a tension belt being fixed to a support plate (e.g., a fastening plate), and a second side of the tension belt being fixed to a second housing part (e.g., a front cover).
FIG. 15 is a diagram of an electronic device according to an embodiment of the present disclosure, illustrating a support plate (e.g., a fastening plate, a fixing plate, a fastening bar, a fixing bar) supporting a portion of an edge of a flexible display (e.g., a rollable display).
FIG. 16 is a diagram illustrating a support plate (eg, a fastening plate, a fixing plate, a fastening bar, a fixing bar) of an electronic device according to an embodiment of the present disclosure.
FIGS. 17 and 18 are diagrams illustrating a support bar (e.g., an end-bar) and a support plate of an electronic device being coupled together, according to an embodiment of the present disclosure.
FIG. 19 is a diagram illustrating a planar section of the end of a rolling portion (e.g., a bending portion) in a slide-out (e.g., a slide out) state of a flexible display (e.g., a rollable display).
FIG. 20 is a diagram of an electronic device according to an embodiment of the present disclosure, illustrating attaching (e.g., fixing) an adhesive member (e.g., pressure sensititive adhesive (PSA)) to a supporting plate (e.g., a fastening plate).
FIG. 21 is a diagram illustrating an extension of a support sheet (e.g., a lattice sheet, a lattice plate) of an electronic device according to an embodiment of the present disclosure.
FIG. 22 is a diagram illustrating an electronic device including a support sheet (e.g., a lattice sheet, a lattice plate) according to an embodiment of the present disclosure.
FIG. 23 is a diagram illustrating an electronic device including a support sheet (e.g., a lattice sheet, a lattice plate) according to an embodiment of the present disclosure.

It should be noted that throughout the drawings, the same reference numbers are used to depict the same or similar elements, features, and structures.

### [Mode for the Invention]

The following description with reference to the accompanying drawings is provided to provide a comprehensive understanding of the various embodiments of the disclosure, as defined by the claims. While various specific details are included herein to aid in understanding, they are to be considered exemplary only. Accordingly, those having ordinary skill in the art will recognize that various changes and modifications may be made to the various embodiments described herein without departing from the scope of the disclosure.

Further, for the sake of clarity and brevity, descriptions of well-known features and configurations may be omitted.

The terms and words used in the following description and claims are not limited to their literary meanings but are merely those used by the applicant to enable a clear and consistent understanding of the present document. Accordingly, it should be apparent to those skilled in the art that the following description of various embodiments of the present document is not intended to limit the present document, as defined by the appended claims, but is provided for illustrative purposes only.

The singular form should be understood to include a plural referent unless the context clearly dictates otherwise. Thus, for example, a reference to a "component surface" may include a reference to more than one such surface.

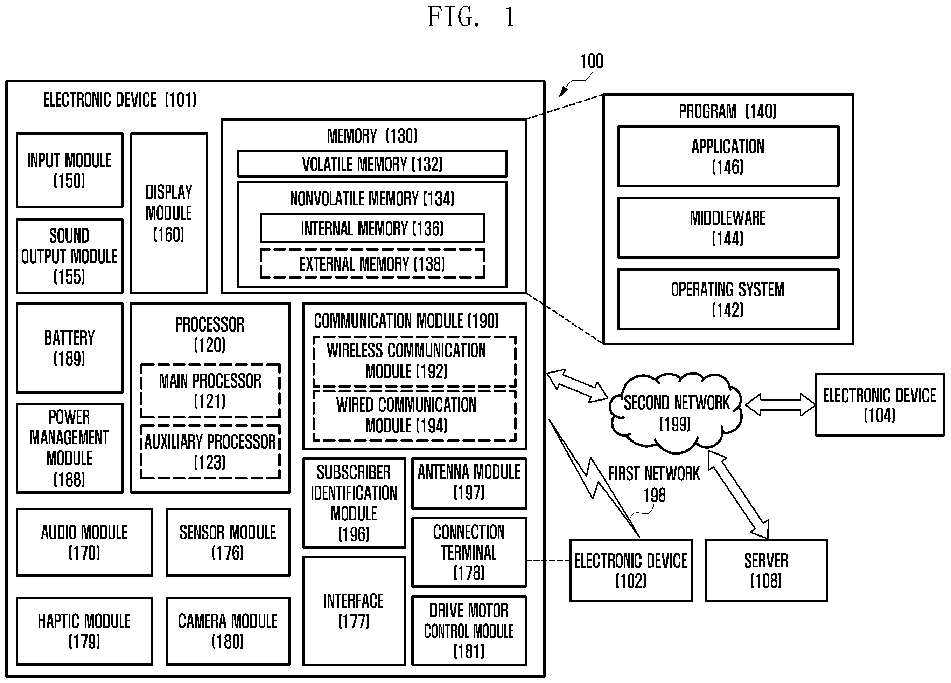

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, the display module 160 may include a flexible display configured to be folded or unfolded.

According to an embodiment, the display module 160 may include a flexible display that is disposed to be slidable (e.g., sliding in an x-axis direction and sliding in a y-axis direction) to provide a screen (e.g., a display screen).

According to an embodiment, the display module 160 may be referred to as a flexible display (e.g., a stretchable display), an expandable display, or a slide-in/out display.

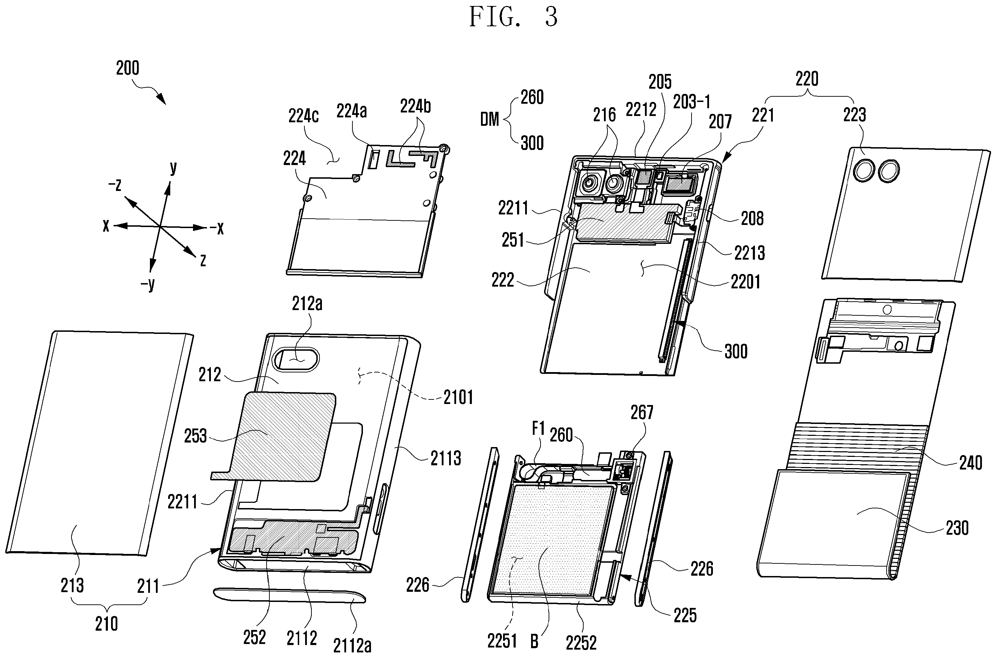

According to various embodiments, the sensor module 176 may include a movement distance detection sensor for detecting a movement distance of a second housing (e.g., a second housing 220 of FIG. 3) from a first housing (e.g., a first housing 210 of FIG. 3) of an electronic device (e.g., an electronic device 200 of FIG. 3).

In an embodiment, the sensor module 176 may detect, as the second housing 220 is moved from the first housing 210, a slide-in state which is a first state, a slide-out state which is a second state, or an intermediate state which is a third state between the slide-in state (e.g., the first state) and the slide-out state (e.g., the second state). In some embodiments, the processor 120 may detect, through the sensor module 176, the distance moved in real time during the movement of the second housing 220 from the first housing 210. The processor 120 may also control the display module 160, through a flexible display (e.g., the flexible display 230 of FIG. 3), to display objects corresponding to a display area that is being varied.

In an embodiment, the electronic device 101 may include a drive motor control module 181 for controlling the operation of a drive motor (e.g., a DC motor or stepping motor) (e.g., the drive motor 260 of FIG. 3) disposed inside the electronic device. In some embodiments, the drive motor control module 181 may be replaced by the processor 120.

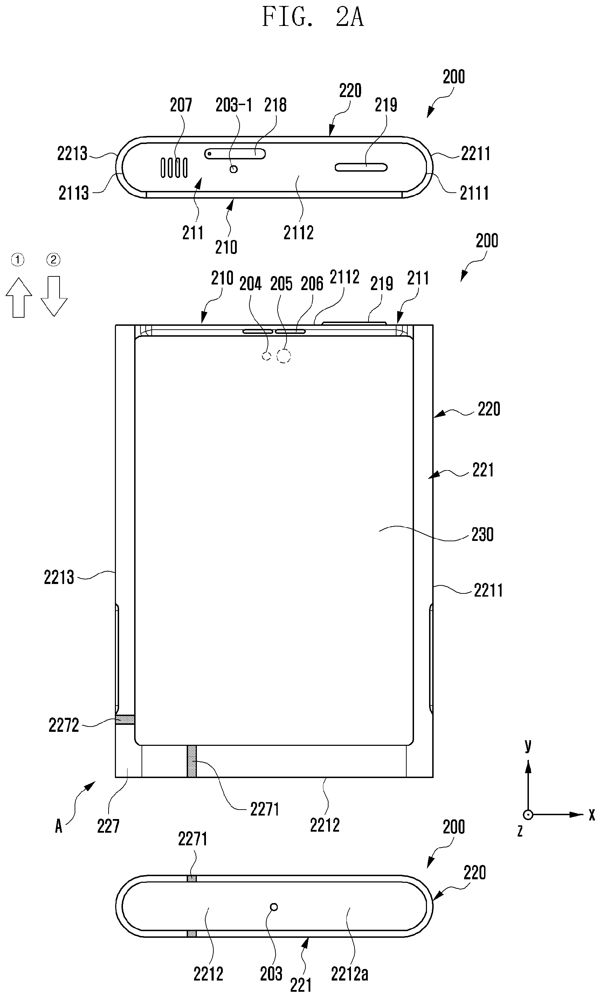

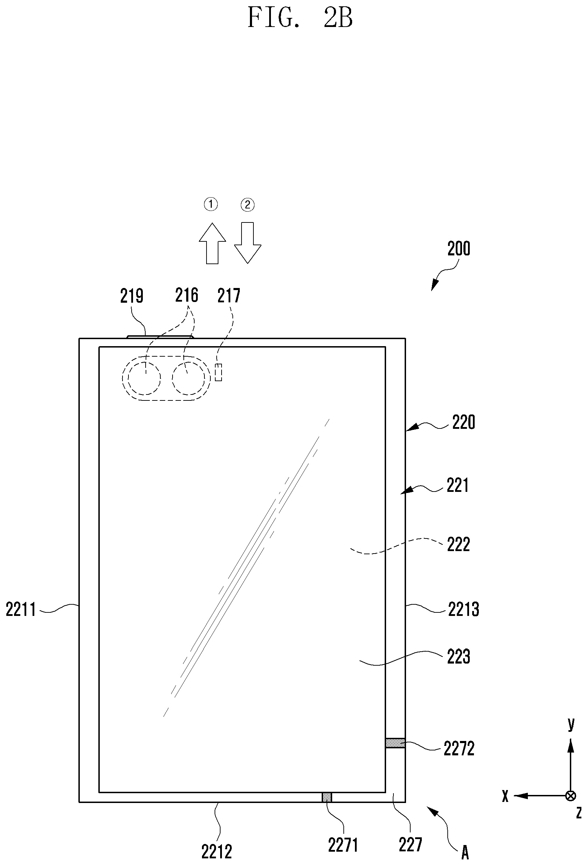

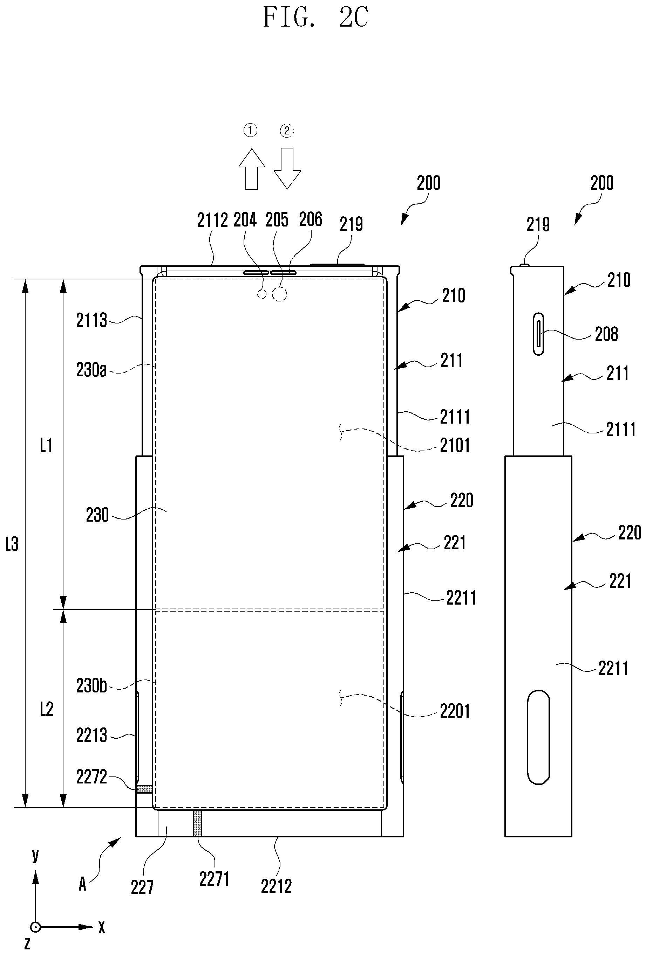

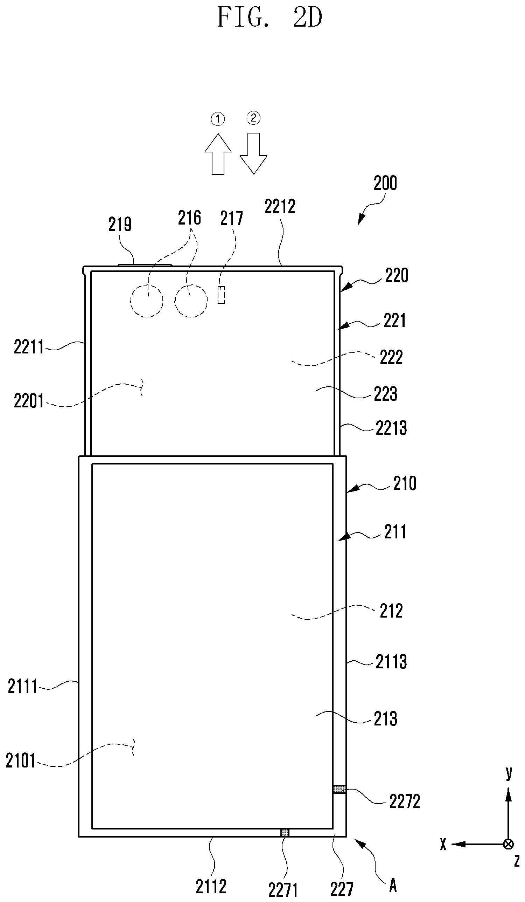

FIGS. 2a and 2b are diagrams illustrating the front and rear surfaces of an electronic device in a slide-in state according to various embodiments of the present disclosure. FIGS. 2c and 2d are diagrams illustrating the front and rear surfaces of an electronic device in a slide-out state according to various embodiments of the present disclosure.

The electronic device 200 of FIGS. 2a to 2d may be at least partially similar to the electronic device 101 of FIG. 1 or may further include other embodiments of the electronic device described herein.

With reference to FIGS. 2a to 2d, an electronic device 200 according to an embodiment of the present disclosure may include a first housing 210, a second housing 220 slidably coupled to the first housing 210 in a specified direction (e.g., direction ① or direction ②) (e.g., ± y-axis direction), and a flexible display 230 (e.g., a rollable display, an expandable display, or a stretchable display) disposed to be supported through at least a portion of the first housing 210 and the second housing 220.

In an embodiment, the second housing 220 may be slidably coupled to the first housing 210 such that it can be slid out in a first direction (direction ①) relative to the first housing 210 or slid in a second direction (direction ②) opposite to the first direction (direction ①).

In an embodiment, the electronic device 200 may be changed to a slide-in state by at least a portion of the second housing 220 being accommodated in at least a portion of the first space 2101 formed through the first housing 210.

In an embodiment, the electronic device 200 may be changed to a slide-out state by at least a portion of the second housing 220 being moved out of the first space 2101 in an outward direction (e.g., direction ①).

In an embodiment, the electronic device 200 may include a support member (e.g., a support member 240 of FIG. 3) (e.g., a bendable member, a bendable support member, an articulating hinge module, or a multi-bar assembly) that, in the slide-out state, forms at least partially the same plane as at least a portion of the second housing 220.

In the slide-in state, a support member (e.g., the support member 240 of FIG. 3) (e.g., a bendable member, a bendable support member, an articulating hinge module, or a multi-bar assembly) of the electronic device 200 may be accommodated, at least partially, in the first space 2101 of the first housing 210 in a bending manner.

In an embodiment, at least a portion of the flexible display 230 may be disposed to be attached to at least a portion of the second housing 220. In an embodiment, at least a portion of the remaining portion of the flexible display 230 may be attached to the support member 240 (e.g., the support member 240 of FIG. 3).

In an embodiment, at least a portion of the flexible display 230 may be disposed to be invisible from the outside by being accommodated into the first space 2101 of the first housing 210 in a bending manner in a slide-in state while being supported by the support member (e.g., the support member 240 of FIG. 3).

In an embodiment, at least a portion of the flexible display 230 may be disposed to be visible from the outside in the slide-out state while being supported by the support member (e.g., the support member 240 in FIG. 3) that forms at least partially the same plane as the second housing 220.

According to various embodiments, the electronic device 200 may include a first housing 210 including a first lateral member 211 and a second housing 220 including a second lateral member 221. In an embodiment, the first lateral member 211 may include a first side surface 2111 having a first length along a first direction (e.g., a y-axis direction), a second side surface 2112 extending from the first side surface 2111 to have a second length that is shorter than the first length along a direction (e.g., a -x-axis direction) substantially perpendicular to the first side surface 2111, and a third side surface 2113 extending from the second side surface 2112 substantially parallel to the first side surface 2111 and having a first length.

In an embodiment, the first lateral member 211 may be formed at least partially of a conductive member (e.g., a metal). In some embodiments, the first lateral member 211 may be formed by combining a conductive member and a non-conductive member (e.g., a polymer). In an embodiment, the first housing 210 may include a first extension member 212 extending from at least a portion of the first lateral member 211 to at least a portion of the first space 2101. In an embodiment, the first extension member 212 may be integrally formed with the first lateral member 211. In some embodiments, the first extension member 212 may be formed separately from the first lateral member 211 and may be structurally coupled to the first lateral member 211.

According to various embodiments, the second lateral member 221 may include: a fourth side surface 2211 corresponding at least in part to the first side surface 2111 and having a third length; a fifth side surface 2212 extending from the fourth side surface 2211 in a direction (e.g., a -x-axis direction) substantially parallel to the second side surface 2112 and having a fourth length shorter than the third length; and a sixth side surface 2213 extending from the fifth side surface 2212 to correspond with the third side surface 2113 and having a third length.

In an embodiment, the second lateral member 221 may be formed at least partially of a conductive member (e.g., a metal). In some embodiments, the second lateral member 221 may be formed by combining a conductive member and a non-conductive member (e.g., a polymer). In an embodiment, at least a portion of the second lateral member 221 may include a second extension member 222 extending into at least a portion of the second space 2201 of the second housing 220. In an embodiment, the second extension member 222 may be integrally formed with the second lateral member 221. In some embodiments, the second extension member 222 may be formed separately from the second lateral member 221 and may be structurally coupled to the second lateral member 221.

According to various embodiments, the first side surface 2111 and the fourth side surface 2211 may be slidably coupled relative to each other. In an embodiment, the third side surface 2113 and the sixth side surface 2213 may be slidably coupled relative to each other. In an embodiment, in the slide-in state, the fourth side surface 2211 may be disposed to overlap the first side surface 2111 so that it is substantially invisible from the outside. In an embodiment, in the slide-in state, the sixth side surface 2213 may be disposed to overlap the third side surface 2113 so that it is substantially invisible from the outside. In some embodiments, at least a portion of the fourth side surface 2211 and the sixth side surface 2213 may be disposed, in the slide-in state, to be at least partially visible from the outside. In an embodiment, in the slide-in state, the second extension member 222 may be disposed to overlap the first extension member 212 so that it is substantially invisible from the outside. In some embodiments, the second extension member 222 may be disposed so that, in the slide-in state, it is at least partially visible from the outside.

According to various embodiments, the first housing 210 may include a first rear cover 213 coupled to at least a portion of the first lateral member 211. In an embodiment, the first rear cover 213 may be disposed to be coupled to at least a portion of the first extension member 212. In some embodiments, the first rear cover 213 may be integrally formed with the first lateral member 211. In an embodiment, the first rear cover 213 may be formed of a polymer, a coated or tinted glass, a ceramic, a metal (e.g., an aluminum, a stainless steel (STS), or a magnesium), or a combination of at least two of these materials. In some embodiments, the first rear cover 213 may extend over at least a portion of the first lateral member 211. In some embodiments, the first rear cover 213 may be omitted, and at least a portion of the first extension member 212 may be replaced by the first rear cover 213.

According to various embodiments, the second housing 220 may include a second rear cover 223 coupled to at least a portion of the second lateral member 221. In an embodiment, the second rear cover 223 may be disposed to be coupled to at least a portion of the second extension member 222. In some embodiments, the second rear cover 223 may be integrally formed with the second lateral member 221. In an embodiment, the second rear cover 223 may be formed of a polymer, a coated or tinted glass, a ceramic, a metal (e.g., an aluminum, a stainless steel (STS), or a magnesium), or a combination of at least two of these materials. In some embodiments, the second rear cover 223 may extend over at least a portion of the second lateral member 221. In some embodiments, the second rear cover 223 may be omitted, and at least a portion of the second extension member 222 may be replaced by the second rear cover 223.

According to various embodiments, the flexible display 230 may include a first portion 230a (e.g., a flat portion) that is always visible from the outside, and a second portion 230b (e.g., a bendable or bending portion) that extends from the first portion 230a and is accommodated in a manner that at least partially bends into the first space 2101 of the first housing 210 so that it is not visible from the outside in the slide-in state.

In an embodiment, the first portion 230a may be disposed to be supported by the second housing 220, and the second portion 230b may be disposed to be supported at least partially by a support member (e.g., the support member 240 of FIG. 3).

In an embodiment, the second portion 230b of the flexible display 230 may be disposed so that it can form substantially the same plane as the first portion 230a and be visible from the outside when the second housing 220 is in a slide-out state along the first direction (direction ①) while being supported by the support member (e.g., the support member 240 of FIG. 3).

In an embodiment, the second portion 230b of the flexible display 230 may be accommodated in such a way that it is bent into the first space 2101 of the first housing 210 when the second housing 220 is in a slide-in state along the second direction (direction ②), and may be disposed so as to be invisible from the outside. Thus, the flexible display 230 may have a variable display area as the second housing 220 is slidably moved away from the first housing 210 along the specified direction (e.g., ± y-axis direction).

According to various embodiments, the flexible display 230 may vary in length in a first direction (direction ①) in response to sliding movement of the second housing 220 relative to the first housing 210. For example, the flexible display 230 may have, in the slide-in state, a first display area corresponding to the first length L1 (e.g., an area corresponding to the first portion 230a). In an embodiment, the flexible display 230 may, in the slide-out state, extend to have a second display area (e.g., an area including the first portion 230a and the second portion 230b) corresponding to a third length L3 that is longer than the first length L1 and larger than the first display area, in response to sliding movement of the second housing 220, which is further moved by a second length L2 relative to the first housing 210.

According to various embodiments, the electronic device 200 may include at least one of a sound input device (e.g., a microphone 203-1), a sound output device (e.g., a call receiver 206 and/or a speaker 207 for calls), sensor modules 204 and 217, camera modules (e.g., a first camera module 205 or a second camera module 216), a connector port 208, a key input device 219, or an indicator (not shown) disposed in the second space 2201 of the second housing 220.

In an embodiment, the electronic device 200 may include another sound input device (e.g., a microphone 203) disposed in the first housing 210. In some embodiments, the electronic device 200 may be configured to omit at least one of the components described above, or to include additional components. In some embodiments, at least one of the components described above may be disposed in the first space 2101 of the first housing 210.

According to various embodiments, the sound input device may include a microphone 203-1. In some embodiments, the sound input device (e.g., the microphone 203-1) may include a plurality of microphones disposed to detect the direction of sound. The sound output device may include, for example, a call receiver 206 and a speaker 207.

In an embodiment, the speaker 207 may be communicated with the outside through at least one speaker hole formed in the second housing 220, in a position that is always exposed to the outside (e.g., at the fifth side surface 2212), regardless of the slide-in/slide-out state. For example, a subscriber identity module (SIM) tray 218 (e.g., a SIM card tray) may be disposed on the fifth side surface 2212 of the first housing 210.

In an embodiment, the connector port 208 may, in the slide-out state, communicate with the outside through a connector port hole formed in the second housing 220. In some embodiments, the connector port 208 may, in the slide-in state, communicate with the outside through an opening formed in the first housing 210 and formed to correspond with the connector port hole. In some embodiments, the call receiver 206 may include a speaker (e.g., a piezo speaker) that is operable without a separate speaker hole.

According to various embodiments, the sensor modules 204 and 217 may generate electrical signals or data values that correspond to an internal operational state of the electronic device 200, or an external environmental state. In an embodiment, the sensor modules 204 and 217 may include, for example, a first sensor module 204 (e.g., a proximity sensor or a light sensor) disposed on a front surface of the electronic device 200 and/or a second sensor module 217 (e.g., a heart rate monitoring (HRM) sensor) disposed on a rear surface of the electronic device 200.

In an embodiment, the first sensor module 204 may be disposed on the front surface of the electronic device 200, below the flexible display 230. In an embodiment, the first sensor module 204 and/or the second sensor module 217 may include at least one of a proximity sensor, a light sensor, a time of flight (TOF) sensor, an ultrasonic sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed at a front surface of the electronic device 200 and a second camera module 216 disposed at a rear surface of the electronic device 200. In an embodiment, the electronic device 200 may include a flash (not shown) positioned near the second camera module 216. In an embodiment, the camera modules 205 and 216 may include one or more lenses, an image sensor, and/or an image signal processor. In an embodiment, the first camera module 205 may be disposed below the flexible display 230 and may be configured to photograph a subject through a portion of an active area (e.g., a display area) of the flexible display 230.

According to various embodiments, the first camera module 205 of the camera modules and some sensor module 204 of the sensor modules 204 and 217 may be disposed to detect the external environment through the flexible display 230. For example, the first camera module 205 or some sensor module 204 may be disposed to interface with the external environment, in the second space 2201 of the second housing 220, through a transmission area or perforated opening formed in the flexible display 230.

In an embodiment, the area facing the first camera module 205 of the flexible display 230 may be formed as a transmissive area having a specified transmittance, as a portion of an active area for displaying content. In an embodiment, the transmissive area may be formed to have a transmittance ranging from about 5% to about 20%. Such a transmissive area may include an area that overlaps an effective area (e.g., field of view area) of the first camera module 205 through which light passes to the image sensor to generate an image. For example, the transmissive area of the flexible display 230 may include an area with a lower pixel placement density and/or wiring density than the surrounding area. For example, the transmissive area may be replaced with openings as described above. For example, some camera modules 205 may include an under display camera (UDC). **In** some embodiments, some sensor module 204 may be disposed to perform its function in the second space 2201 of the second housing 220 without being visually exposed through the flexible display 230.

According to various embodiments, the electronic device 200 may include at least one antenna element (e.g., an antenna element 224b of FIG. 3) electrically connected to a wireless communication circuit (e.g., a wireless communication module 192 of FIG. 1) disposed in an inner space (e.g., a second space 2201 of second housing 220). **In an** embodiment, the electronic device 200 may also include a bezel antenna A disposed through at least a portion of the conductive first lateral member 211 of the first housing 210. For example, the bezel antenna A may include a conductive portion 227 (e.g., a conductive member) disposed through at least a portion of the second side surface 2112 and third side surface 2113 of the first lateral member 211 and electrically segmented through at least one segmentation portion 2271 and 2272 formed of a non-conductive material (e.g., a polymer).

In an embodiment, the wireless communication circuit (e.g., the wireless communication module 192 of FIG. 1) may be configured to transmit or receive wireless signals in at least one specified frequency band (e.g., about 600 MHz to 9000 MHz) (e.g., legacy band or NR band) through the conductive portion 227. In an embodiment, the electronic device 200 may include a side cover 2112a disposed on the second side surface 2112 to cover at least a portion of the at least one segmentation portion 2271. In some embodiments, the bezel antenna A may be disposed on at least one of the first side surface 2111, the second side surface 2112, or the third side surface 2113. In some embodiments, the bezel antenna A may be disposed on at least one of the fourth side surface 2211, fifth side surface 2212, or sixth side surface 2213 of the second housing 220. In some embodiments, the electronic device 200 may further include at least one antenna module (e.g., an mmWave antenna module or an mmWave antenna structure) disposed in an inner space (e.g., a first space 2101 or a second space 2201) and disposed to transmit or receive wireless signals in a frequency band ranging from about 3 GHz to 100 GHz, through another wireless communication circuit (e.g., wireless communication module 192 of FIG. 1).

According to various embodiments, the slide-in/slide-out operation of the electronic device 200 may be performed automatically. For example, the slide-in/slide-out operation of the electronic device 200 may be performed by a drive module that includes a drive motor (e.g., a drive motor 260 of FIG. 3) including a pinion gear and at least one interworking gear gear-coupled to the pinion gear, disposed in a first space 2101 of the first housing 210, and a rack structure (e.g., a rack structure 300 of FIG. 3) disposed in a second space 2201 of the second housing 220 and gear-coupled to the pinion gear and the interworking gear.

In some embodiments, the drive motor 260 may be disposed in the second space 2201 of the second housing 220, and the rack structure 300 may be disposed in the first space 2101 of the first housing 210. For example, a processor of the electronic device 200 (e.g., the processor 120 of FIG. 1) may operate a drive motor disposed inside the electronic device 200 (e.g., the drive motor 260 of FIG. 3) when detecting a triggering signal to change from the slide-in state to the slide-out state, or to change from the slide-out state to the slide-in state. In an embodiment, the triggering signal may include a signal based on the selection (e.g., a touch) of an object displayed on the flexible display 230, or a signal based on the operation of a physical button (e.g., key button) included in the electronic device 200. In some embodiments, the slide-in/slide-out operation of the electronic device 200 may be performed manually through user manipulation.

According to various embodiments, the electronic device 200 has a structure in which the second housing 220 is slid in and/or slid out relative to the first housing 210 along a length direction (e.g., a vertical direction) (e.g., a ± y-axis direction) of the electronic device 200, but not limited thereto. For example, the electronic device 200 may have a structure in which the second housing 220 is slid in and/or slid out relative to the first housing 210 along a width direction (e.g., a horizontal direction) (e.g., a ± x-axis direction) perpendicular to the length direction of the electronic device 200. In some embodiments, the electronic device 200 may be formed such that the length of the second side surface 2112 of the first housing 210 is longer than the length of the first side surface 2111. In such a case, the length of the fifth side surface 2212 of the second housing 220 may correspondingly be formed to be longer than the length of the fourth side surface 2211.

FIG. 3 is an exploded perspective view of an electronic device according to various embodiments of the present disclosure.

In describing the electronic device 200 of FIG. 3, components that are substantially the same as the electronic device 200 of FIGS. 2a to 2d are assigned the same reference numerals, and a detailed description thereof may be omitted.

With reference to FIG. 3, the electronic device 200 may include: a first housing 210 including a first space 2101; a second housing 220 slidably coupled to the first housing 210 and including a second space 2201; a support member 240; a flexible display 230 (e.g., a rollable display); and a drive module (DM) (e.g., a drive mechanism).

For example, the support member 240 may be fixed to at least a portion of the second housing 220 and may be at least partially bendably accommodated into the first space 2101 according to the slide-in operation. For example, a flexible display 230 (e.g., a rollable display) may be disposed to be supported by at least a portion of the support member 240 and the second housing 220. For example, a drive module (DM) (e.g., a drive mechanism) may drive the second housing 220 in a slide-in direction (e.g., the -y-axis direction) and/or a slide-out direction (e.g., the y-axis direction) from the first housing 210.

In an embodiment, the first housing 210 may include a first lateral member 211 and a first rear cover 213 coupled to at least a portion of the first lateral member 211 (e.g., at least a portion of the first extension member 212). In an embodiment, the second housing 220 may include a second lateral member 221 and a second rear cover 223 coupled to at least a portion of the second lateral member 221 (e.g., at least a portion of the second extension member 222).

According to various embodiments, the electronic device 200 may include a plurality of electronic components disposed in the second space 2201. In an embodiment, the plurality of electronic components may include a first substrate 251 (e.g., a main board), a camera module 216 disposed around the periphery of the first substrate 251, a speaker 207, a connector port 208, and a microphone 203-1. In an embodiment, the plurality of electronic components may be efficiently electrically connected because they are disposed around the first substrate 251 in the second space 2201 of the second housing 220. In some embodiments, at least one of the plurality of electronic components described above may be disposed in the first space 2101 of the first housing 210.

According to various embodiments, the electronic device 200 may include a rear bracket 224 disposed between the second extension member 222 and the second rear cover 223 in the second housing 220. In an embodiment, the rear bracket 224 may be disposed to cover at least a portion of the plurality of electronic components. In an embodiment, the rear bracket 224 may be structurally coupled to at least a portion of the second extension member 222. In some embodiments, the rear bracket 224 may be omitted. In an embodiment, the rear bracket 224 may be disposed to cover a plurality of electronic components and support the second rear cover 223. In an embodiment, the rear bracket 224 may include an opening 224a (e.g., a through-hole) and/or a notch area 224c (e.g., a cutting portion) formed in the area corresponding to the camera module 216 and/or the sensor module (e.g., the sensor module 217 of FIG. 2d). In an embodiment, the rear bracket 224 may include at least one antenna element 224b. In an embodiment, the at least one antenna element 224b may be disposed on the outer surface when the rear bracket 224 is formed from an injection of a dielectric material (e.g., an antenna carrier). In an embodiment, the at least one antenna element 224b may include a laser direct structuring (LDS) antenna pattern formed on the outer surface of the rear bracket 224. In some embodiments, the at least one antenna element 224b may include a conductive plate attached to an outer surface of the rear bracket 224, a conductive paint, or a conductive pattern formed on the outer surface. In some embodiments, the at least one antenna element 224b may be disposed in such a way that it is embedded upon injection of the rear bracket 224. In an embodiment, the at least one antenna element 224b may be electrically connected to a wireless communication circuit disposed on the first substrate 251 (e.g., the wireless communication module 192 of FIG. 1) and may be configured to transmit or receive wireless signals in a specified frequency band (e.g., a legacy band). In an embodiment, the camera module 216 and/or the sensor module 217 may be disposed to detect the external environment through the opening 224a and/or the notch area 224c. In an embodiment, the second rear cover 223 may be transparent in at least the area corresponding to the camera module 216 and/or the sensor module 217. In some embodiments, the second rear cover 223 may include a through-hole formed in the area corresponding to at least the 0camera module 216 and/or the sensor module 217. In such cases, the through-hole may be covered by a transparent window. In some embodiments, the camera module 216 and/or the sensor module 217 may be configured to operate only when the electronic device 200 is in the slide-out state.

According to various embodiments, the electronic device 200 may include a support bracket 225 disposed in the first space 2101 of the first housing 210. In an embodiment, the support bracket 225 may include a support portion 2252 having a curved outer surface to support a rear surface of the support member 240 that is disposed at one end and is bent during the sliding operation of transitioning from a slide-out state to a slide-in state.

In an embodiment, the support bracket 225 may include a support structure for supporting and fixing the drive motor 260 of the drive module (DM) through the motor bracket 267. In an embodiment, the support bracket 225 may include a battery seating portion 2251 to accommodate the battery.

In an embodiment, the drive motor 260 may be disposed such that, at its most end (e.g., edge) in the support bracket 225, in the slide-out direction (e.g., the y-axis direction), a pinion gear and an interworking gear gear-coupled to the pinion gear are gear-coupled to the rack structure 300 disposed in the second space 2201. In an embodiment, once an assembly of the electronic device 200 is completed, the drive motor 260 may be positioned closest to the first substrate 251 of the electronic components disposed in the first housing 210 and help minimize the size and/or length of the flexible substrate F1 (e.g., a flexible printed circuit board (FPCB)) electrically connecting the first substrate 251 and the drive motor 260. In an embodiment, the electronic device 200 may include a pair of guide rails 226 disposed on either side of the support bracket 225 to guide both ends of the support member 240 in a sliding direction. In an embodiment, the guide rails 226 may have a guide structure for guiding both ends of the support member 240.

According to various embodiments, the first housing 210 may include, in the first extension member 212, an opening 212a (e.g., a through-hole) disposed in a area corresponding to the camera module 216 and/or the sensor module 217 disposed in the second housing 220, when the electronic device 200 is in the slide-in state. In an embodiment, the camera module 216 and/or the sensor module 217 may detect the external environment through the openings 212a formed in the first housing 210 when the electronic device 200 is in the slide-in state. In some embodiments, the area of the first rear cover 213, corresponding to the camera module 216 and/or the sensor module 217, may be processed to be transparent.

According to various embodiments, the electronic device 200 may include, in the first housing 210, a second substrate 252 (e.g., a sub-substrate) and an antenna member 253 disposed between the first extension member 212 and the first rear cover 213. In an embodiment, the second substrate 252 and the antenna member 253 may be disposed on at least a portion of the first extension member 212. In an embodiment, the second substrate 252 and the antenna member 253 may be electrically connected to the first substrate 251 through at least one electrical connection member (e.g., a flexible printed circuit board, FPCB, or a flexible RF cable, FRC).

In an embodiment, the antenna member 253 may include a multi-function coil or multi-function core (MFC) antenna for performing wireless charging functionality, near field communication (NFC) functionality, and/or electronic payment functionality. In some embodiments, the antenna member 253 may be electrically connected to the second substrate 252, and thus electrically connected to the first substrate 251 through the second substrate 252. In some embodiments, the second substrate 252 and/or the antenna member 253 may be electrically connected to the first substrate 251 through at least a portion of the flexible substrate F1 connecting the drive motor 260 to the first substrate 251.

In the electronic device 200 according to an exemplary embodiment of the present disclosure, the pinion gear and the interworking gear that receives driving force through the drive motor 260 are gear-coupled to the rack structure 300, respectively, so that an increased gear-coupling portion is provided compared to the conventional method, which can be applied as a shock dispersion structure by an external impact.

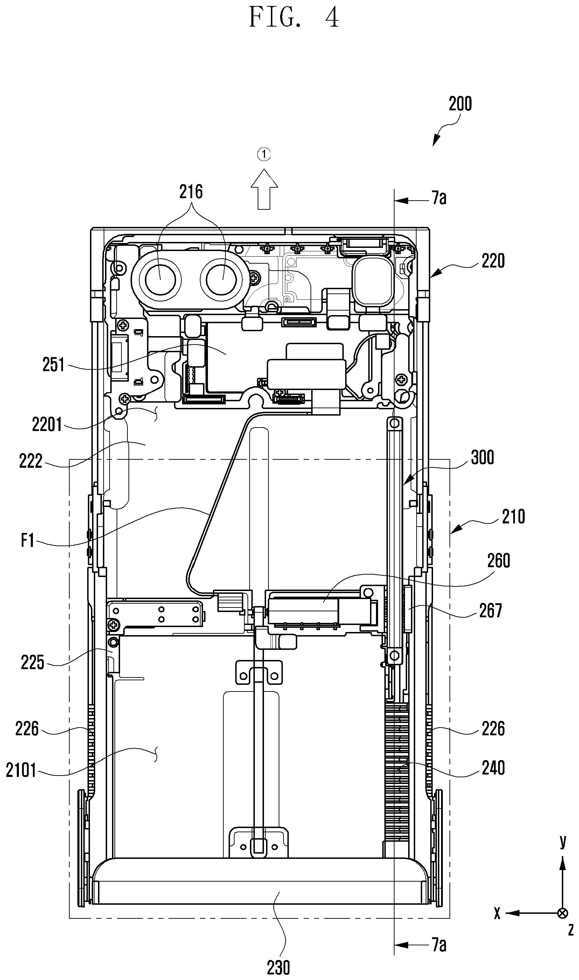

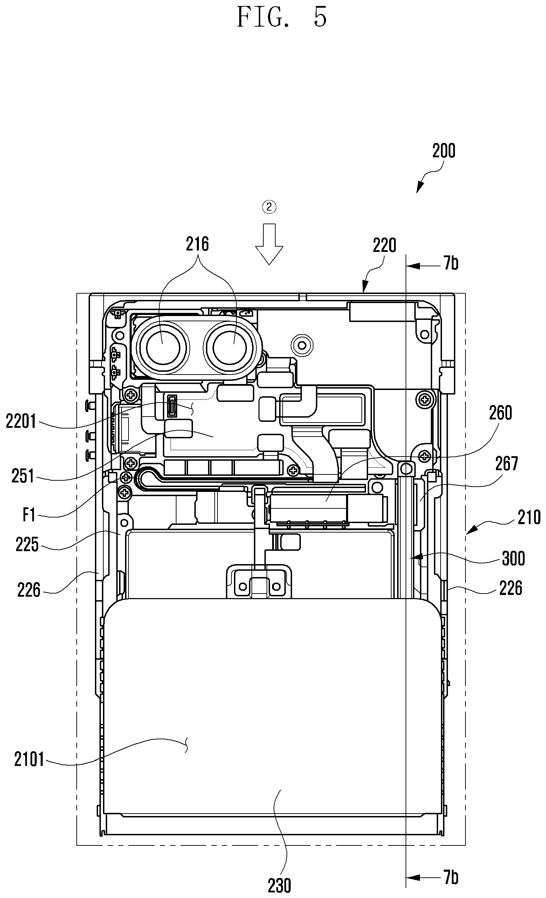

FIG. 4 is a configuration diagram of an electronic device in a slide-out state according to various embodiments of the present disclosure. FIG. 5 is a configuration diagram of an electronic device in a slide-in state according to various embodiments of the present disclosure.

With reference to FIGS. 4 and 5, the electronic device 200 may include: a first housing 210 including a first space 2101; a second housing 220 slidably coupled to the first housing 210 and including a second space 2201; a support member 240 fixed to at least a portion of the second housing 220 and at least partially bendably accommodated in the first space 2101 according to the slide-in operation; a flexible display 230 disposed to be supported by at least a portion of the support member 240 and the second housing 220; and a drive module (e.g., the driving module (DM) of FIG. 3) (e.g., a drive mechanism) driving the second housing 220 in a slide-in direction (e.g., the -y-axis direction) and/or a slide-out direction (e.g., the y-axis direction) from the first housing 210.

According to various embodiments, the drive module (DM) may include a drive motor (e.g., the drive motor 260 of FIG. 3) disposed in a first space 2101 and including a pinion gear as a first gear and an interworking gear as a second gear gear-coupled to interwork with the pinion gear, and a rack structure 300 disposed to be gear-coupled to the pinion gear in a second space 2201.

In an embodiment, the drive motor may be electrically connected to the first substrate 251 disposed in the second space 2201 through the flexible substrate F1. In an embodiment, the drive module (DM) may further include a reduction module (e.g., a reduction gear assembly) disposed to reduce the rotational speed and increase the driving force by being coupled to the drive motor 260.

In an embodiment, the drive motor 260 may be disposed to be supported through a motor bracket 267 disposed on a support bracket 225 disposed in the first space 2101 of the first housing 210. In an embodiment, the drive motor 260 may be fixed to an end (e.g., an edge) of the support bracket 225, in the first space 2101, in the slide-out direction (e.g., the y-axis direction). In an embodiment, the rack structure 300 may be disposed in such a way that it is fixed to the second extension member 222 of the second housing 220. In an embodiment, the rack structure 300 may be disposed to have a length in a direction parallel to the sliding direction (e.g., ± y-axis direction). Thus, when the electronic device 200 is assembled, the pinion gear and the interworking gear may remain gear-coupled to the rack structure 300, and the pinion gear and the interworking gear, provided with drive power from the drive motor 260, may be moved on the rack structure 300, resulting in the second housing 220 being moved relative to the first housing 210. In one embodiment, the sliding distance of the second housing 220 may be determined by the length of the rack structure 300.

According to an exemplary embodiment of the present disclosure, the rack structure 300 of the drive module (DM) may include a first rack gear and a second rack gear coupled to be spaced apart from the first rack gear. In an embodiment, the second rack gear may be disposed in an overlapping position with the first rack gear when the second extension member 222 is viewed from above. In an embodiment, a pinion gear of the drive motor 260 may be gear-coupled to the first rack gear, and an interworking gear may be gear-coupled to the pinion gear and the second rack gear 310. For example, according to an exemplary embodiment of the present disclosure, the drive module (DM) may have an increased gear coupling portion and a shock dispersion structure in which external impact is distributed to each gear coupling portion. According to an exemplary embodiment of the present disclosure, the possibility of breakage of the drive module (DM) in the event of an external impact (in particular, in the event of an external impact in the slide-out state) may be reduced and help improve the reliability of the electronic device.

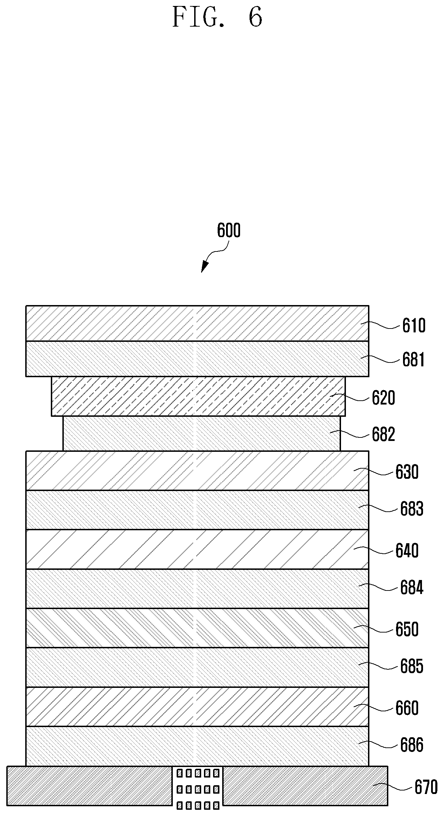

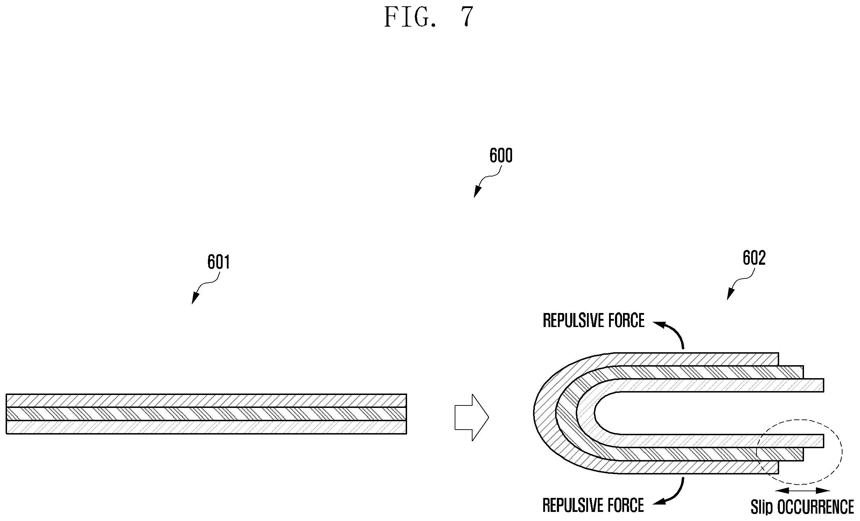

FIG. 6 is a diagram illustrating a stacked structure of a flexible display (e.g., a rollable display). FIG. 7 is a diagram illustrating that the length of layers change and a repulsive force occurs due to the unfolding and bending of a flexible display (e.g., a rollable display).

With reference to FIGS. 6 and 7, a flexible display 600 (e.g., a rollable display) may include a protective layer 610, a window glass 620, a polarizing layer 630 (e.g., a polarizing film), a display panel 640, a shock absorbing layer 650, a support plate 660, and a lattice plate 670. Between each of the layers, respective adhesive layers 681, 682, 683, 684, 685, and 686 (e.g., pressure sensitive adhesive (PSA)) may be disposed and bond the layers. The respective layers may be bonded with the adhesive layers 681, 682, 683, 684, 685, and 686 (e.g., PSA) that are slipable to respond to changes in the length of each layer of the flexible display 600 (e.g., the rollable display).

The flexible display 600 (e.g., a rollable display) may have the display panel 640 and the protective materials of the display panel 640 formed very thinly (e.g., 0.02 to 0.1 mm) to allow for bending. For example, the support plate 660 and the lattice plate 670 may be formed of metal plates to support the display panel 640 and prevent it from deforming.

The slide-in and slide-out of the electronic device (e.g., the electronic device 200 of FIG. 3) causes the flexible display 600 (e.g., the rollable display) to change between the unfolding state 601 and the bending state 602 (e.g., the rolling state). When the flexible display 600 (e.g., the rollable display) is in the bending state 602 (e.g., the rolling state), a strong repulsive force is generated in the opposite direction. In the unfolding state 601 and the bending state 602 (e.g., rolling state) of the flexible display 600 (e.g., rollable display), the slip lengths of the layers may vary, and different repulsive forces may be generated.

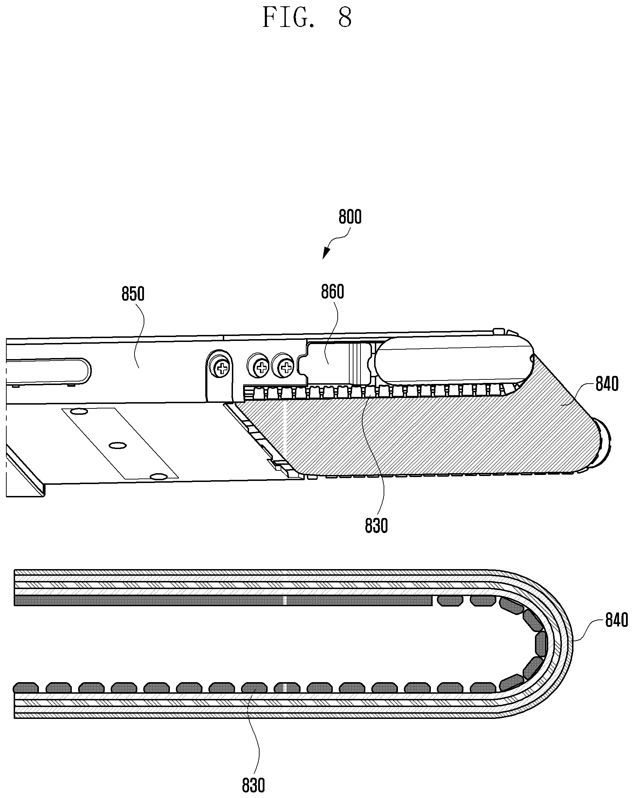

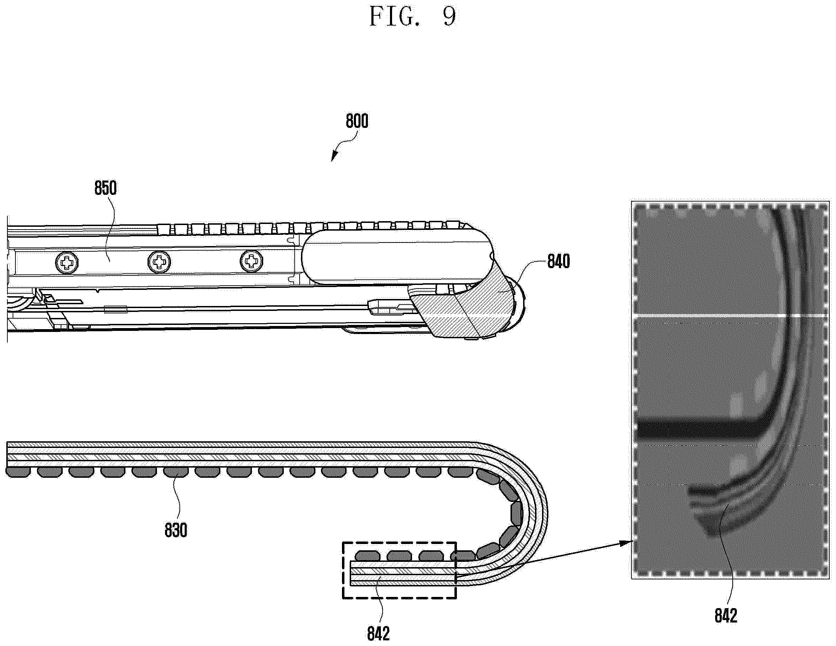

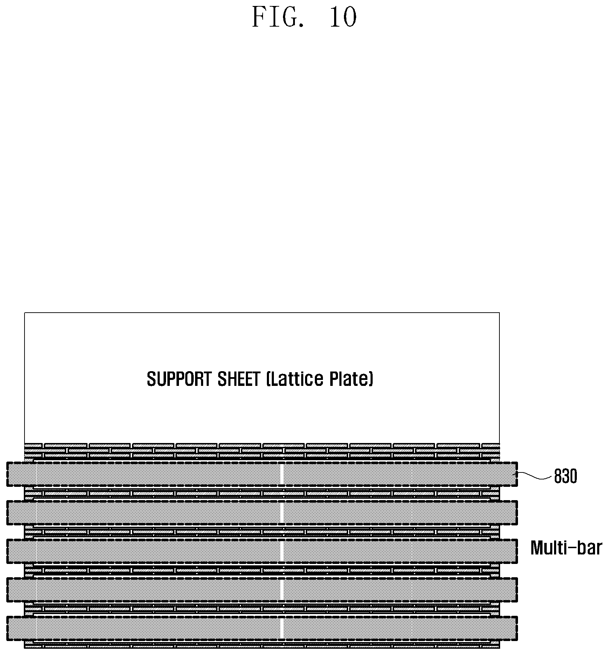

FIG. 8 is a diagram illustrating a slide-in state of a flexible electronic device (e.g., a rollable electronic device). FIG. 9 is a diagram illustrating a slide-out state of a flexible electronic device (e.g., a rollable electronic device). FIG. 10 is a diagram illustrating a support member (e.g., a multi-bar) supporting a flexible display.

With reference to FIGS. 8 to 10, a flexible electronic device 800 (e.g., a rollable electronic device) (e.g., the electronic device 200 of FIGS. 2a to 2d, the electronic device 200 of FIG. 3) may include: a first housing 850 (e.g., the first housing 210 of FIG. 3); a second housing 860 (e.g., the second housing 220 of FIG. 3); a flexible display 840 (e.g., the flexible display 230 of FIG. 3); and a support member 830 (e.g., the support member 240 of FIG. 3) (e.g., the bendable member, the bendable support member, the articulating hinge module, or the multi-bar assembly). For example, the second housing 860 may be slidably coupled to the first housing 850 in a specified direction (e.g., direction ① or direction ② of FIG. 2a to 2d) (e.g., ± y-axis direction) from the first housing 850. For example, the flexible display 840 may be disposed to be supported through at least a portion of the first housing 850 and the second housing 860.

For example, the second housing 860 may be slidably coupled to the first housing 850 such that it slides out in a first direction ((direction ①) relative to the first housing 850, or slides in in a second direction (direction ②) opposite to the first direction (direction ①). For example, the electronic device 800 may be changed to the slide-in state by at least a portion of the second housing 860 being accommodated in a space formed through the first housing 850. For example, the electronic device 800 may be changed to a slide-out state by at least a portion of the second housing 860 being moved in an outward direction (e.g., direction ①).

For example, when the electronic device 800 is in a slide-in state, the support member 830 may be accommodated at least partially in the inner space of the first housing 850 in a bending manner. For example, at least a portion of the flexible display 840 may be disposed in such a manner that it is attached to at least a portion of the second housing 860. For example, at least a portion of the remaining portion of the flexible display 840 may be attached to the support member 830.

For example, the left and right portions of the flexible display 840 may be supported (e.g., pressed and held) by the guide rails (e.g., the guide rail 226 of FIG. 3), and the center portion of the flexible display 840 may be supported by the support member 830 to prevent the flexible display 840 from wrinkling and/or delaminating as shown in Fig. 9 by longitudinal end portions 842. Otherwise, the end portions 842 may be side end-portions of a side of the flexible display 840 that is aligned perpendicularly to a sliding direction. Other terms describing a state of the end portions 842 may be lifting or freying or peeling off the different flexible display leyers.

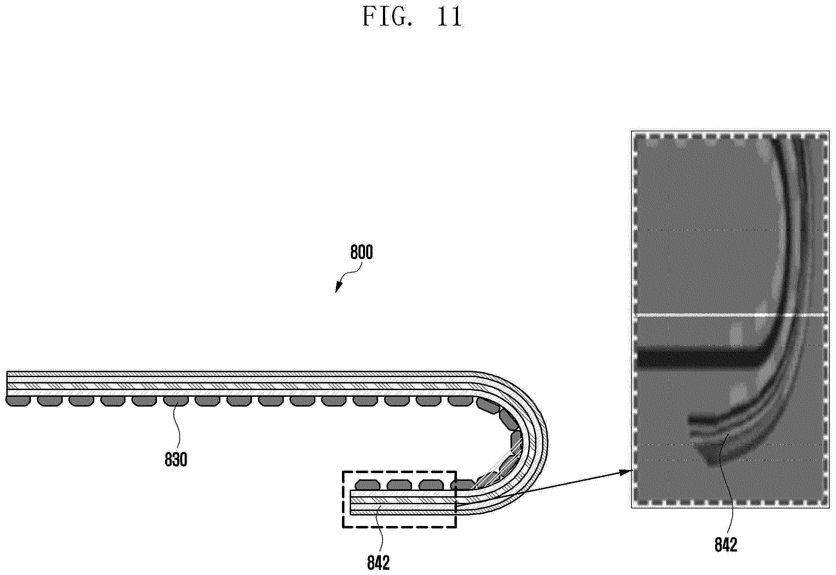

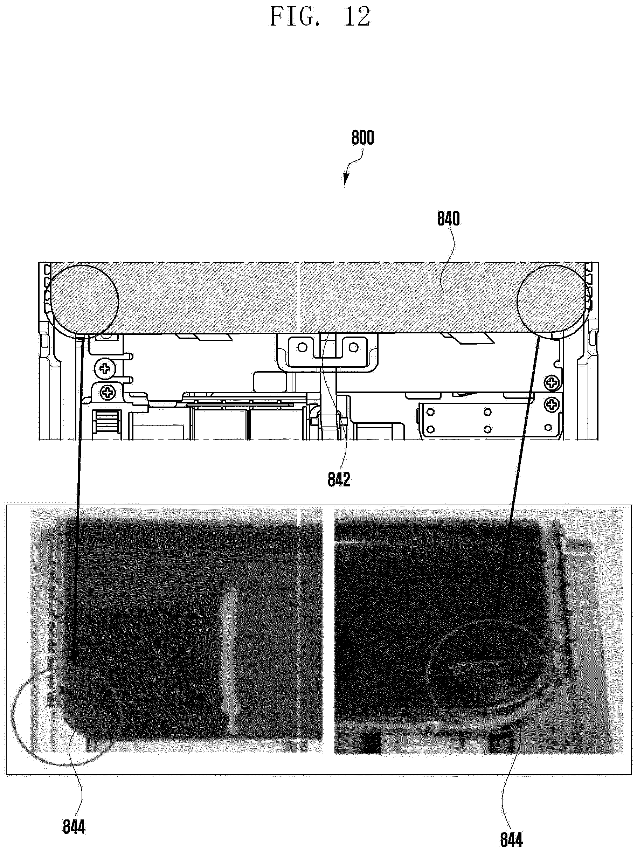

FIGS. 11 and 12 are diagrams illustrating that a lifting occurs at the edge (e.g., a longitudinal edge) of a flexible display (e.g., a rollable display) by the slide-in and slide-out of a flexible electronic device (e.g., a rollable electronic device).

With reference to FIGS. 11 and 12 in conjunction, the longitudinal end portions 842 of the flexible display 840 may experience the greatest change in repulsive force and pressure because of unfolding and bending. A support bar (e.g., a bar disposed at the end of a multi-bar) (e.g., a fixed bar that fixes the flexible display) (e.g., a support bar that partially overlaps the display) may be disposed to support the longitudinal end portion 842 of the flexible display 840. The support bar may be one of a plurality of bars that include a support member 830 (e.g., the support member 240 of FIG. 3) (e.g., a bendable member, a bendable support member, an articulating hinge module, or a multi-bar assembly). The support bar may support an end (edge) portion 842 of the flexible display 840. The support bar may have a larger area than other bars in the multi-bar. The support bar may be utilized to support (e.g., attach to) the flexible display 840 over a larger area and to support the longitudinal end portions 842 of the flexible display 840.

The rear surface of the flexible display 840 (e.g., the bottom surface, the surface opposite to the surface on which the screen is displayed) is supported by the support bars, but the upper surface of the flexible display 840 (e.g., the top surface, the surface on which the screen is displayed) is unsupported, which can cause a lifting at the end portions 842 because of the repeated unfolding and bending. In addition, delamination may occur at the longitudinal end corner portions 844 of the flexible display 840, which may result in a lifting.

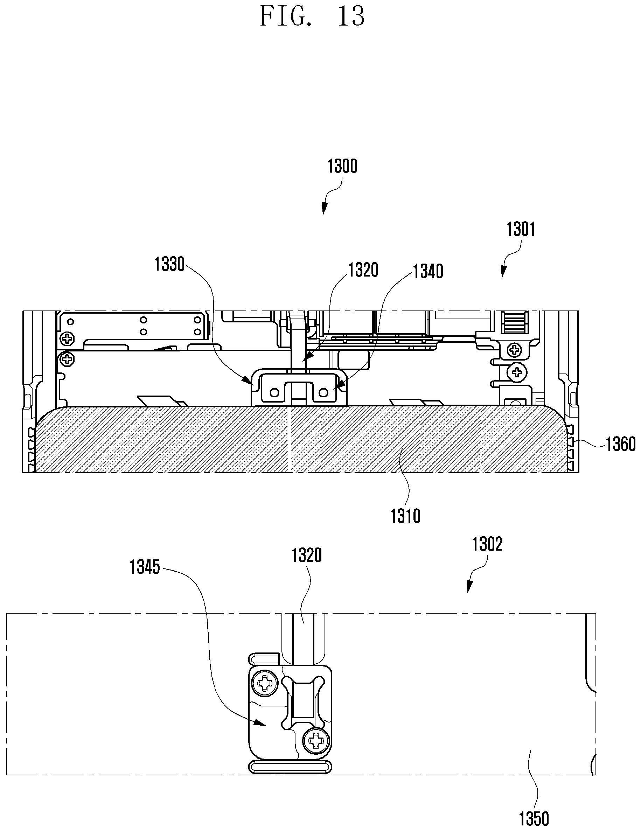

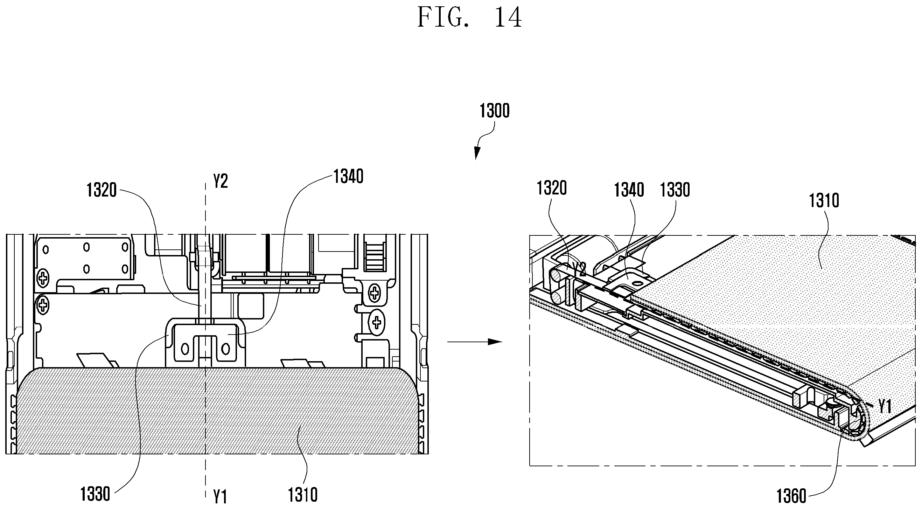

FIG. 13 is a diagram of an electronic device according to an embodiment of the present disclosure, illustrating a support bar (e.g., an end-bar), a support plate (e.g., a fastening plate), and a tension belt of the electronic device. FIG. 14 is a diagram illustrating a first side of a tension belt being fixed to a support plate (e.g., a fastening plate), and a second side of the tension belt being fixed to a second housing part (e.g., a front cover).

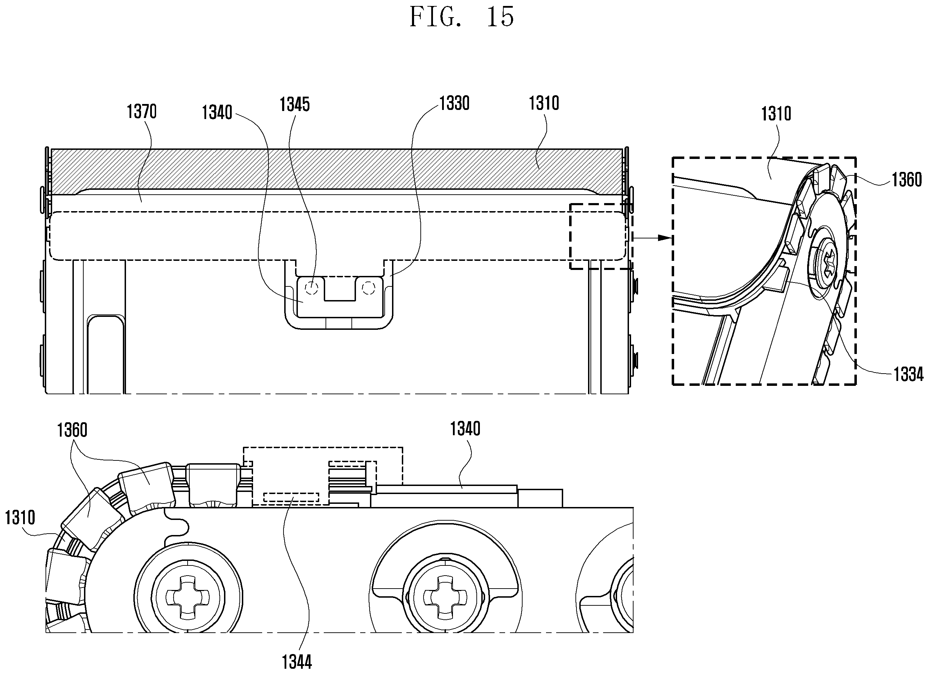

With reference to FIGS. 13 and 14, an electronic device 1300 (e.g., an electronic device 200 of FIGS. 2a to 2d, an electronic device 200 of FIG. 3, an electronic device 200 of FIGS. 4 and 5) according to an embodiment of the present disclosure may include: a housing; a flexible display 1310; a tension belt 1320; a support bar 1330 (e.g., a support bar disposed last among the multi-bars) (e.g., a fixed bar that fixes the flexible display) (e.g., a support bar that partially overlaps the display); a support plate 1340; a support member 1360 (e.g., a support member 240 of FIG. 3) (e.g., a bendable member, a bendable support member, an articulating hinge module, or a multi-bar assembly); a display support sheet (e.g., a display support sheet 1370 of FIG. 15) (e.g., a lattice sheet, a lattice plate, a metal sheet, a metal plate, a metal plate including support plate slits (or holes), a support plate including a perforated lattice structure, a metal support sheet having a lattice structure). Although shown and described together it may also be the case that the support bar 1330 is present without the support plate 1340 or that the support plate 1340 is present without the support bar 1330. For example, the wrinkling typically forms outward and in some cases the support plate 1340 alone will greately reduce such wrinkling. The wrinkling may further be reduced by adding the support bar 1330 to the support plate 1340. It may also be the case that the orientation of the support bar 1330 and the support plate 1340 is reversed (front to back) as long as the support bar 1330 and the support plate 1340 support the edge portion on opposite surfaces of the flexible display 1310 (i.e. front and back).

According to an embodiment, the support bar 1330 may be one of a plurality of bars including the support member 1360. The support bar 1330 may support a portion of an edge of the flexible display 1310. The support bar 1330 may have a larger area than other bars in the multi-bar. A portion of the support bar 1330 may overlap the display 1310 and directly support the display. A portion of the support bar 1330 may not overlap the display 1310 and may be fastened (e.g., connected and fixed) to another plate or frame.

According to an embodiment, the housing may include a first housing part (e.g., a first housing 210 of FIG. 3) (e.g., a support bracket 225 of FIG. 3) (e.g., a frame cover), and a second housing part 1350 (e.g., a second housing 220 of FIG. 3) (e.g., a front cover)) slidably disposed with respect to the first housing part 210.

For example, the flexible display 1310 may be disposed such that, according to sliding of the first housing part (e.g., the first housing 210 of FIG. 3) (e.g., the support bracket 225 of FIG. 3) (e.g., the frame cover), at least a portion of the flexible display 1310 may slide into the inner side of the second housing part 1350 (e.g., the second housing 220 of FIG. 3) (e.g., the front cover)) or slide out of the inner side of the housing. Due to the wrinkling or delaminating, an end that is typically the bottom end of the the flexible display 1310 may require increased stiffness than the multi-bar because the repulsion force and strain change occur the most when the rollable device 1300 is extended. This increased stiffness is provided by the support bar 1330 and/or the support plate 1340.

According to an embodiment, a tension belt 1320 may be disposed to apply tension to the flexible display 1310. When viewed from a first direction 1301 of the electronic device 1300, a first side of the tension belt 1320 may be fastened and fixed to the support plate 1340 at a portion overlapping the support bar 1330. For example, a screw may be fastened in the support plate 1340, and the support plate 1340 may press against the first side of the tension belt 1320 and fix the first side of the tension belt 1320. For example, a hook structure may be formed on the first side of the tension belt 1320 to prevent the first side of the tension belt 1320 from slipping off the support plate 1340. For example, when viewed from the second direction 1302 of the electronic device 1300, the second side of the tension belt 1320 may be pressed by a fixing plate 1345 that is fastened to a second housing part 1350 (e.g., the second housing 220 of FIG. 3) (e.g., the front cover). A second side of the tension belt 1320 may be fixed to the second housing part 1350 by the fixing plate 1345. A hook structure may be formed on the second side of the tension belt 1320 to prevent the second side of the tension belt 1320 from slipping off the fixing plate 1345.

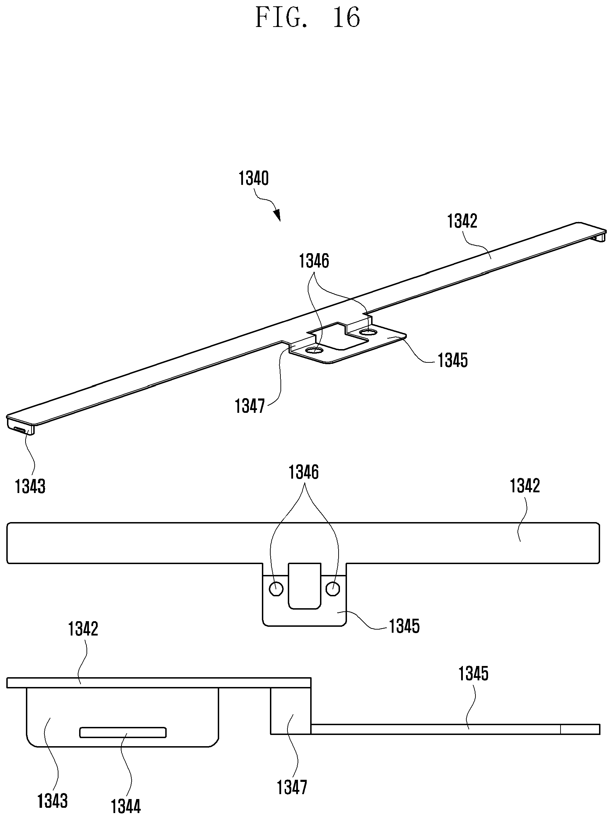

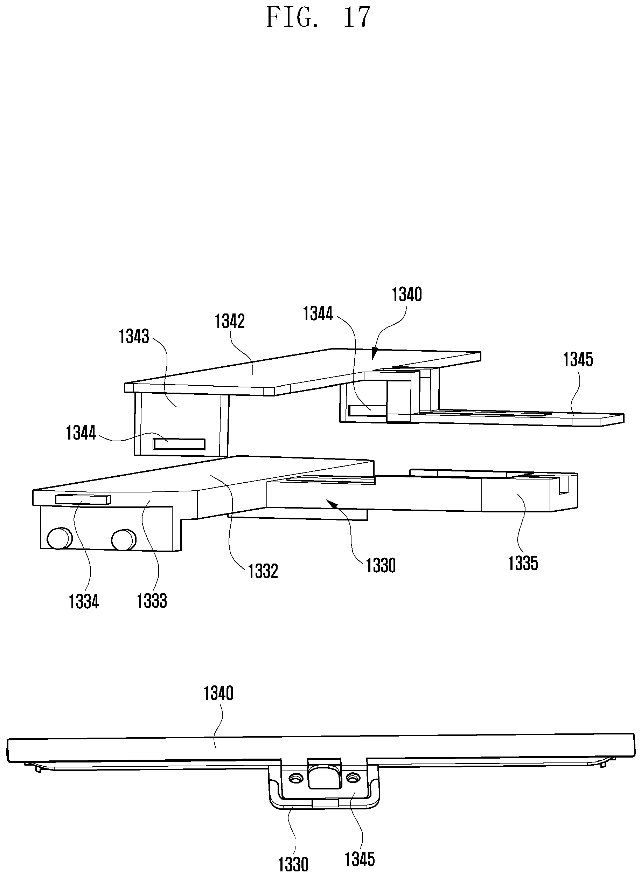

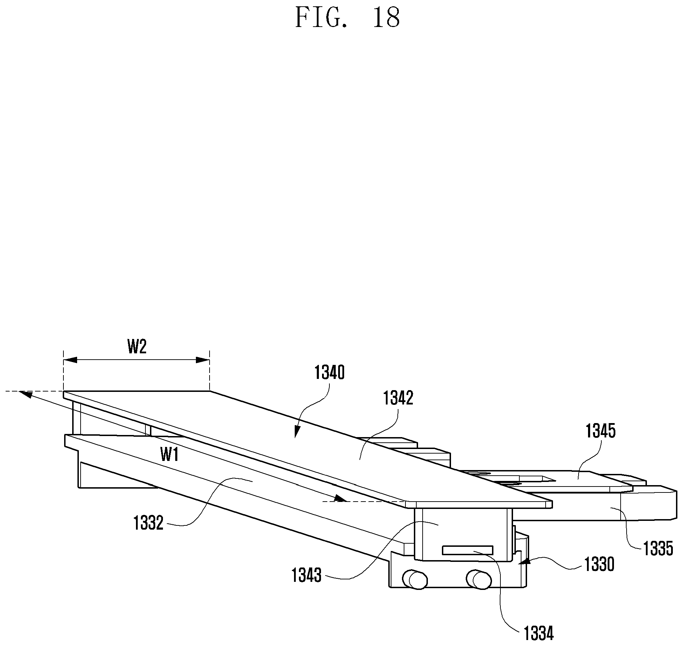

FIG. 15 is a diagram of an electronic device according to an embodiment of the present disclosure, illustrating a support plate (e.g., a fastening plate, a fixing plate, a fastening bar, a fixing bar) supporting a portion of an edge of a flexible display (e.g., a rollable display). FIG. 16 is a diagram illustrating a support plate (eg, a fastening plate, a fixing plate, a fastening bar, a fixing bar) of an electronic device according to an embodiment of the present disclosure. FIGS. 17 and 18 are diagrams illustrating a support bar (e.g., an end-bar) and a support plate of an electronic device being coupled together, according to an embodiment of the present disclosure.

With reference to FIGS. 15 to 18, a display support sheet 1370 (e.g., a lattice sheet, a lattice plate, a metal sheet, a metal plate) may be disposed on a rear surface of the flexible display 1310 and support the flexible display 1310. For example, the flexible display 1310 may include a first area (e.g., a flat portion) and a second area (e.g., a rolling portion, a bending portion). The display support sheet 1370 may be disposed on a lower portion of the second area (e.g., the rolling portion, the bending portion) to support the second area (e.g., the rolling portion, the bending portion) of the flexible display 1310.

According to an embodiment, the support bar 1330 (e.g., a support bar disposed at the end of a multi-bar) (e.g., a fixed bar that fixes the flexible display) may be coupled (e.g., bonded) to at least a portion of an edge portion of the flexible display 1310 (e.g., a longitudinal end portion of the flexible display 1310) (e.g., '842' of FIG. 12) from an inner side of the housing. For example, the support bar 1330 may support the longitudinal end portions and edge portions of the flexible display 1310. The support bar 1330 may support the flexible display 1310 in a rear direction (e.g., a downward direction).

According to an embodiment, the support plate 1340 may include a first portion 1345 and a second portion 1342.

For example, the support bar 1330 may be positioned at the bottom and the support plate 1340 may be positioned at the top. At least a portion of the first portion 1345 of the support plate 1340 may be disposed to overlap at least a portion of the first area 1335 of the support bar 1330.

For example, one or more first holes may be formed in the first area 1335 of the support bar 1330. One or more second holes 1346 may be formed in a first portion 1345 of the support plate 1340 to overlap the first holes formed in the first area 1335 of the support bar 1330. A screw may be fastened in the first hole formed in the first area 1335 of the support bar 1330 and the second hole 1346 formed in the first portion 1345 of the support plate 1340. The support bar 1330 and the support plate 1340 may be coupled (e.g., fixed) by fastening the screw.

For example, at least a portion of the second portion 1342 of the support plate 1340 may be disposed to overlap at least a portion of the second area 1332 of the support bar 1330.

For example, the second portion 1342 of the support plate 1340 may be disposed to overlap an edge portion of the rolling portion of the flexible display 1310. The second portion 1342 of the support plate 1340 may support an edge portion of the rolling portion of the flexible display 1310.

For example, a first surface (e.g., the surface on which the screen is displayed) of an edge portion of the rolling portion of the flexible display 1310 may overlap a second portion 1342 of the support plate 1340 and be fixed by the second portion 1342 of the support plate 1340.

For example, a second surface (e.g., opposite surface of the first surface) of the edge portion of the rolling portion of the flexible display 1310 may overlap the second area 1332 of the support bar 1330 and may be fixed to the second area 1332 of the support bar 1330.

For example, the support bar 1330 may include a third area 1333 (e.g., the third area 1333 of FIG. 17) extending substantially perpendicularly from both ends of the second area 1332. For example, a protrusion 1334 may be formed in the third area 1333 of the support bar 1330. The protrusion 1334 may be present symmetrically on both ends of the second area 1332 and facilitate a firm connection between the ends of the second area 1332 and the ends of second portion 1342. For example, the protrusion 1334 may protrude from the second area 1332 of the support bar 1330, i.e., the protrusions 1334 may be disposed to protrude from the sides of the the second area 1332. For example, although the second region 1332 and third region 1333 have been described separately, the second region 1332 and third region 1333 may be formed to be continuous. The protrusions 1334 may be disposed in either the second region 1332 or the third region 1333 to correspond with the slits 1344.

For example, the support plate 1340 may include a third portion 1343 (e.g., the third portion 1343 of FIG. 17) extending substantially perpendicularly from both ends of the second portion 1342. The third portion 1343 of the support plate 1340 may have a slit 1344 (e.g., the slit 1344 of FIG. 17) formed in the third portion 1343.

For example, a protrusion 1334 formed in a third area 1333 of the support bar 1330 may be inserted into a slit 1344 to be formed in a third portion 1343 of the support plate 1340. The protrusion 1334 and the slit 1344 may have various shapes and sizes to form a press-fit connection.

A protrusion 1334 formed in the third area 1333 of the support bar 1330 may be inserted into a slit 1344 to be formed in the third portion 1343 of the support plate 1340, such that the support plate 1340 may be fixed (e.g., fastened) to the support bar 1330. This allows at least a portion of the end (edge) portion 842 of the flexible display 840 to be positioned in the space formed by the second area 1332 of the support bar 1330 and the second portion 1342 and the third portion 1343 of the support plate 1340, thereby preventing a delamination or a lifting of the end (edge) portion 842 of the flexible display 840. At least a portion of the end (edge) portion 842 of the flexible display 840 may be surrounded by the second area 1332 of the support bar 1330 and the second portion 1342 and the third portion 1343 of the support plate 1340. Preferably, the second area 1332, the second portion 1342 and the third portion 1343 form a rectangular box shape to surround the edge portion 842 of the flexible display 840 to prevent wrinkling of the edge portion e.g. wrinkling and/or delaminating as shown in Fig. 9. A rear surface of the end (edge) portion 842 of the flexible display 840 may be coupled to the second area 1332 of the support bar 1330 through an adhesive member. A front surface (e.g., opposite to the rear surface) of the end (edge) portion 842 of the flexible display 840 may be coupled through an adhesive member to the second portion 1342 of the support plate 1340.

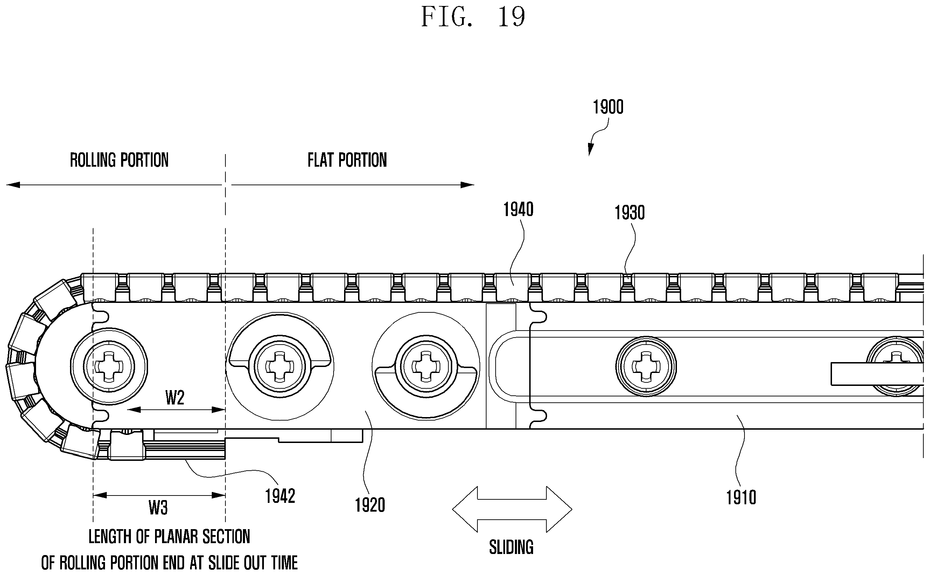

FIG. 19 is a diagram illustrating a planar section of the end of a rolling portion (e.g., a bending portion) in a slide-out (e.g., a slide out) state of a flexible display (e.g., a rollable display).

The electronic device 1900 of FIG. 19 may be at least partially similar to the electronic device 200 of FIG. 3 and the electronic device 1300 of FIGS. 13 to 18, or may further include other embodiments of the electronic device.

With reference to FIGS. 18 and 19, a housing of an electronic device 1900 (e.g., the electronic device 200 of FIG. 3, the electronic device 1300 of FIGS. 13 and 14) according to an embodiment of the present disclosure may include a first housing part 1910 (e.g., a first housing 210 of FIG. 3) (e.g., a support bracket 225 of FIG. 3) (e.g., a frame cover), and a second housing part 1920 (e.g., a second housing 220 of FIG. 3) (e.g., a front cover) slidably disposed on the first housing part 1910. For example, the flexible display 1930 (e.g., the flexible display 1310 of FIGS. 13 to 15) may be disposed such that at least a portion of the flexible display 1930 can slide into the inner side of the second housing part 1920, or slide out of the inner side of the housing according to sliding of the first housing part 1910.

For example, a support member 1940 (e.g., the support member 1360 of FIGS. 13 to 15) (e.g., the support member 240 of FIG. 3) (e.g., a bendable member, a bendable support member, an articulating hinge module, or a multi-bar assembly) may support the flexible display 1930.

For example, the width W1 in the x-axis direction of the second portion 1342 of the support plate 1340 may overlap the width in the x-axis direction of the flexible display 1930. The width W1 in the x-axis direction (e.g., the width direction of the flexible display) of the second portion 1342 of the support plate 1340 may be formed to be at least the same length as the width in the x-axis direction of the flexible display 1930.

For example, the width W2 in the y-axis direction of the second portion 1342 of the support plate 1340 may overlap a width in the y-axis direction of the flexible display 1930 (e.g., the length direction of the flexible display). The width W2 in the y-axis direction of the second portion 1342 of the support plate 1340 may be formed to be at least the same length as the width in the x-axis direction of the flexible display 1930.

For example, the width W2 in the y-axis direction of the second portion 1342 of the support plate 1340 may be formed to have a length that is smaller than the width W3 of the end planar section 1942 of the rolling portion of the flexible display 1930. For example, the width W3 of the end planar section 1942 of the rolling portion of the flexible display 1930 may be formed to have a length of about 6 mm.

For example, the width W2 in the y-axis direction of the second portion 1342 of the support plate 1340 may be formed to be longer than the length of the slit caused by the unfolding and bending of the flexible display 1930.

For example, the width W2 in the y-axis direction of the second portion 1342 of the support plate 1340 may be formed to be shorter than the width W3 of the end planar section 1942 of the rolling portion of the flexible display 1930.

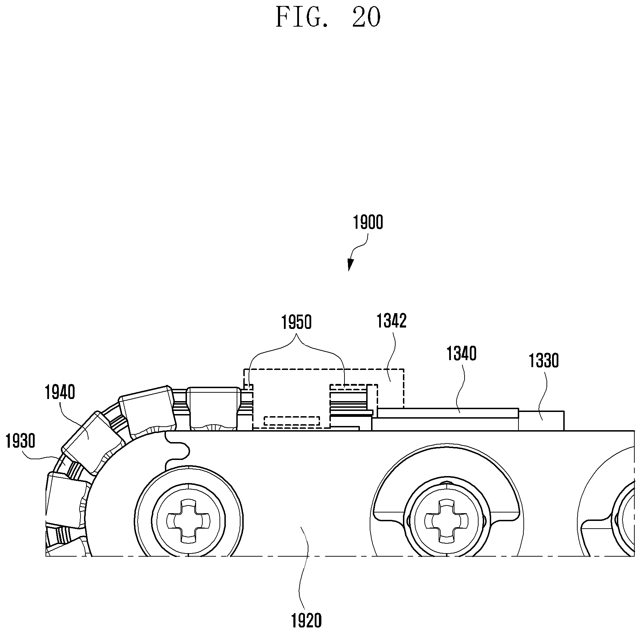

FIG. 20 is a diagram of an electronic device according to an embodiment of the present disclosure, illustrating attaching (e.g., fixing) an adhesive member (e.g., pressure sensititive adhesive (PSA)) to a supporting plate (e.g., a fastening plate).

The electronic device 1900 of FIG. 20 may be at least partially similar to the electronic device 200 of FIG. 3 and the electronic device 1300 of FIGS. 13 to 18, or may further include other embodiments of the electronic device.

With reference to FIG. 20, the support bar 1330 may be positioned at the bottom and the support plate 1340 may be positioned at the top. For example, at least a portion of the second portion 1342 of the support plate 1340 may be positioned to overlap an edge portion of the rolling portion of the flexible display 1930. The second portion 1342 of the support plate 1340 may support an edge portion of the rolling portion of the flexible display 1310.

According to an embodiment, a first surface (e.g., the surface on which the screen is displayed) of an edge portion of the rolling portion of the flexible display 1930 may overlap a second portion 1342 of the support plate 1340 and may be fixed by the second portion 1342 of the support plate 1340. For example, an adhesive member 1950 (e.g., a pressure sensitive adhesive (PSA)) may be disposed between the rolling portion of the flexible display 1930 and the second portion 1342 of the support plate 1340 to fix (e.g., attach) the rolling portion of the flexible display 1930 to the second portion 1342 of the support plate 1340. For example, the adhesive member 1950 (e.g., PSA) may include a double-sided adhesive member. In an example, a high elongation, low modulus PSA 1950 is attached between the top/front layer of the flexible display 1930 and the second portion 1342 to maximize slip between the two.

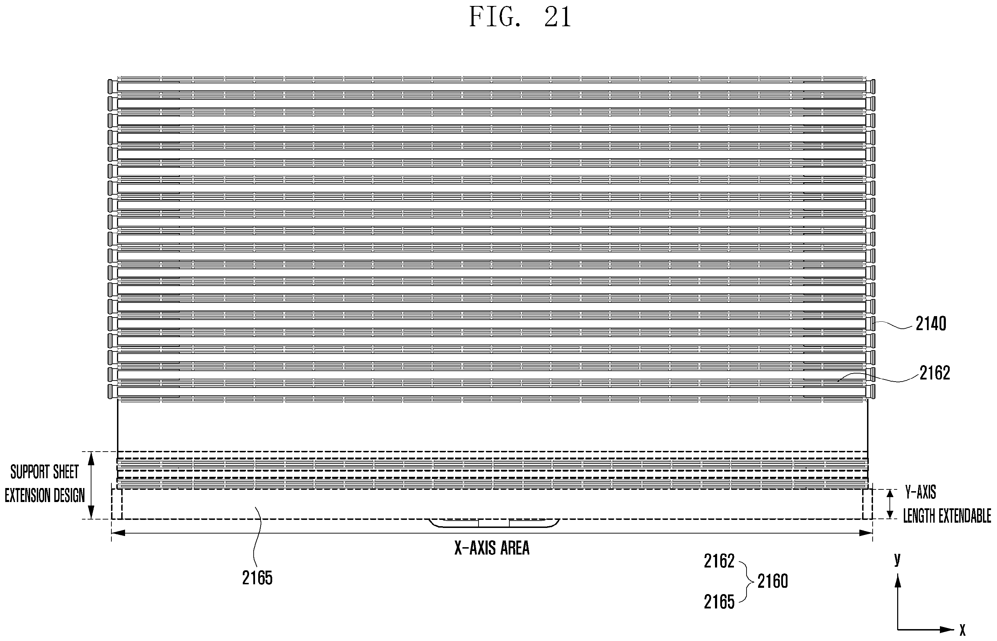

FIG. 21 is a diagram illustrating an extension of a support sheet (e.g., a lattice sheet, a lattice plate) of an electronic device according to an embodiment of the present disclosure.

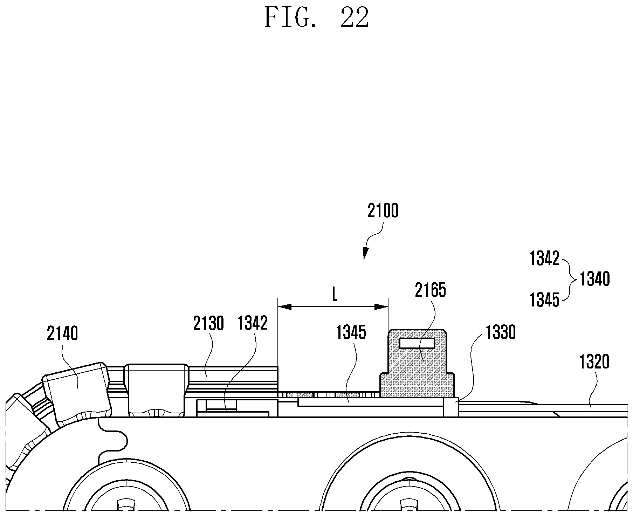

FIG. 22 is a diagram illustrating an electronic device including a support sheet (e.g., a lattice sheet, a lattice plate) according to an embodiment of the present disclosure.

The electronic device 2100 of FIGS. 21 and 22 may be at least partially similar to the electronic device 200 of FIG. 3 and the electronic device 1300 of FIGS. 13 to 18, or may further include other embodiments of the electronic device.

With reference to FIGS. 21 and 22, an electronic device 2100 (e.g., the electronic device 200 of FIGS. 2a to 2d, the electronic device 200 of FIG. 3, the electronic device 200 of FIGS. 4 and 5, and the electronic device 1300 of FIGS. 13 and 14) according to an embodiment of the present disclosure may include: a housing; a flexible display 2130 (e.g., the flexible display 1310 of FIGS. 13 and 14); a tension belt 1320; a support bar 1330 (e.g., the support bar 1330 of FIGS. 13 and 14) (e.g., a support bar disposed at the end of a multi-bar) (e.g., a fixed bar that fixes a flexible display); a support plate 1340; a support member 2140 (e.g., the support member 1360 of FIGS. 13 and 14) (e.g., the support member 240 of FIG. 3) (e.g., a bendable member, a bendable support member, an articulating hinge module, or a multi-bar assembly); and a display support sheet 2160 (e.g., the display support sheet 1370 of FIG. 15) (e.g., a lattice sheet, a lattice plate, a metal sheet, a metal plate).

For example, the flexible display 2130 may be disposed such that, according to sliding of the first housing part (e.g., the first housing 210 of FIG. 3) (e.g., the support bracket 225 of FIG. 3) (e.g., the frame cover), at least a portion of the flexible display 2130 may slide into the inner side of the second housing part (e.g., the second housing 220 of FIG. 3) (e.g., the front cover)) or slide out of the inner side of the housing.

According to an embodiment, a tension belt 1320 may be disposed to apply the tension to the flexible display 2130. When viewed from a first direction of the electronic device 1300 (e.g., first direction 1301 of FIG. 13), a first side of the tension belt 1320 may be fixed by fastening a support plate 1340 at a portion overlapping the support bar 1330. For example, a screw may be fastened in the support plate 1340, and the support plate 1340 may press against the first side of the tension belt 1320 and fix the first side of the tension belt 1320. For example, a hook structure may be formed on the first side of the tension belt 1320 to prevent the first side of the tension belt 1320 from slipping off the support plate 1340. For example, when viewed from a second direction of the electronic device 2100 (e.g., second direction 1302 of FIG. 13), the second side of the tension belt 1320 may be pressed by a fixing plate (e.g., fixing plate 1345 of FIG. 13) that is fastened to a second housing part (e.g., second housing 220 of FIG. 3) (e.g., front cover). The second side of the tension belt 1320 may be fixed to the second housing portion by the fixing plate 1345. A hook structure may be formed on the second side of the tension belt 1320 to prevent the second side of the tension belt 1320 from slipping off the fixing plate 1345.

According to an embodiment, the support bar 1330 (e.g., a support bar disposed at the end of a multi-bar) (e.g., a fixed bar that fixes the flexible display) may be coupled (e.g., bonded) to at least a portion of an edge portion of the flexible display 2130 (e.g., a longitudinal end portion of the flexible display 2130) (e.g., '842' of FIG. 12) from an inner side of the housing. For example, the support bar 1330 may support a longitudinal end portion and an edge portion of the flexible display 2310. The support bar 1330 may support the flexible display 2130 in a rear direction (e.g., a downward direction).

According to an embodiment, the support plate 1340 may include a first portion 1345 and a second portion 1342.

For example, the support bar 1330 may be positioned at the bottom and the support plate 1340 may be positioned at the top. At least a portion of the first portion 1345 of the support plate 1340 may be disposed to overlap at least a portion of the first area 1335 of the support bar 1330.

For example, one or more first holes may be formed in the first area 1335 of the support bar 1330. One or more second holes (second holes 1346 in FIG. 17) may be formed in the first portion 1345 of the support plate 1340 to overlap the first holes formed in the first area 1335 of the support bar 1330. A screw may be fastened in the first hole formed in the first area 1335 of the support bar 1330 and the second hole 1346 formed in the first portion 1345 of the support plate 1340. The support bar 1330 and the support plate 1340 may be coupled (e.g., fixed) by fastening the screw.

For example, at least a portion of the second portion 1342 of the support plate 1340 may be disposed to overlap at least a portion of the second area 1332 of the support bar 1330.

For example, the second portion 1342 of the support plate 1340 may be disposed to overlap an edge portion of the rolling portion of the flexible display 1310. The second portion 1342 of the support plate 1340 may support an edge portion of the rolling portion of the flexible display 1310.

For example, a first surface (e.g., the surface on which the screen is displayed) of an edge portion of the rolling portion of the flexible display 1310 may overlap a second portion 1342 of the support plate 1340 and be fixed by the second portion 1342 of the support plate 1340.

For example, a second surface (e.g., the opposite surface of the first surface) of the edge portion of the rolling portion of the flexible display 1310 may overlap a second area of the support bar 1330 (e.g., second area 1332 of FIG. 17) and may be fixed to the second area 1332 of the support bar 1330.

For example, the support bar 1330 may include a third area (e.g., third area 1333 of FIG. 17) extending from both ends of the second area 1332. For example, the third area 1333 of the support bar 1330 may have a protrusion (e.g., the protrusion 1334 of FIG. 17) formed in the third area 1333.

For example, the support plate 1340 may include a third portion (e.g., the third portion 1343 of FIG. 17) extending in a perpendicular direction from both ends of the second portion 1342. The third portion 1343 of the support plate 1340 may have a slit (e.g., the slit 1344 of FIG. 17) formed in the third portion 1343.

For example, a protrusion 1334 formed in a third area 1333 of the support bar 1330 may be inserted into a slit 1344 to be formed in a third portion 1343 of the support plate 1340.

A protrusion 1334 formed in the third area 1333 of the support bar 1330 may be inserted into a slit 1344 to be formed in the third portion 1343 of the support plate 1340, such that the support plate 1340 may be fixed (e.g., fastened) to the support bar 1330.

According to an embodiment, a display support sheet 2160 (e.g., a lattice sheet, a lattice plate, a metal sheet, a metal plate) may be disposed on the rear surface of the flexible display 2130 to support the flexible display 2130. For example, the flexible display 2130 may include a first area (e.g., a flat portion) and a second area (e.g., a rolling portion, a bending portion). The display support sheet 2160 may be disposed on a lower portion of the second area (e.g., the rolling portion, the bending portion) to support the second area (e.g., the rolling portion, the bending portion) of the flexible display 2130.

For example, the display support sheet 2160 may include a first portion 2162 that overlaps the flexible display 2130, and a second portion 2165 that extends from the first portion 2162. The second portion 2165 of the display support sheet 2160 may extend a length L in the y-axis direction (e.g., the length direction of the flexible display). For example, the length L along which the second portion 2165 of the display support sheet 2160 extends may extend longer than the thickness of the flexible display 2130.

For example, the second portion 2165 of the display support sheet 2160 may not overlap the flexible display 2130. For example, at least a portion of the second portion 2165 of the display support sheet 2160 may overlap a portion of the support plate 1340. At least a portion of the second portion 2165 of the display support sheet 2160 may overlap at least a portion of the second portion 1342 of the support plate 1340.

According to an embodiment, an adhesive member (e.g., a pressure sensitive adhesive (PSA)) may be disposed between the second portion 2165 of the display support sheet 2160 and the second portion 1342 of the support plate 1340. For example, the second portion 2165 of the display support sheet 2160 may be fixed (e.g., attached) to the second portion 1342 of the support plate 1340 by the adhesive member.

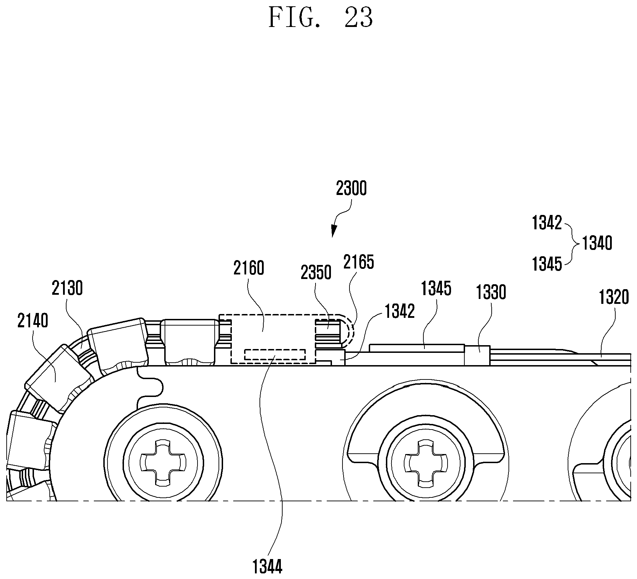

FIG. 23 is a diagram illustrating an electronic device including a support sheet (e.g., a lattice sheet, a lattice plate) according to an embodiment of the present disclosure.

The electronic device 2300 of FIG. 23 may be at least partially similar to the electronic device 200 of FIG. 3, the electronic device 1300 of FIGS. 13 to 18, and the electronic device 2100 of FIGS. 21 and 22, or may further include other embodiments of the electronic device.

With reference to FIGS. 21 and 23, an electronic device 2300 (e.g., an electronic device 200 of FIGS. 2a to 2d, an electronic device 200 of FIG. 3, an electronic device 200 of FIGS. 4 and 5, an electronic device 1300 of FIGS. 13 and 14, an electronic device 2100 of FIG. 22) according to an embodiment of the present disclosure may include: a housing; a flexible display 2130 (e.g., a flexible display 1310 of FIGS. 13 and 14); a tension belt 1320; a support bar 1330 (e.g., a support bar 1330 of FIGS. 13 and 14) (e.g., a support bar disposed last among the multi-bars) (e.g., a fixed bar that fixes a flexible display); a support plate 1340; a support member 2140 (e.g., the support member 1360 of FIGS. 13 and 14) (e.g., the support member 240 of FIG. 3) (e.g., a bendable member, a bendable support member, an articulating hinge module, or a multi-bar assembly); and a display support sheet 2160 (e.g., the display support sheet 1370 of FIG. 15) (e.g., a lattice sheet, a lattice plate, a metal sheet, a metal plate).

According to an embodiment, a tension belt 1320 may be disposed to apply tension to the flexible display 2130.

According to an embodiment, a support bar 1330 (e.g., a support bar disposed last among the multi-bars) (e.g., a fixed bar that fixes the flexible display) may be coupled (e.g., bonded) to at least a portion of an edge portion of the flexible display 2130 (e.g., a longitudinal end portion of the flexible display 2130) (e.g., '842' of FIG. 12) from an inner side of the housing. For example, the support bar 1330 may support a longitudinal end portion and an edge portion of the flexible display 2310. The support bar 1330 may support the flexible display 2130 in a rear direction (e.g., a downward direction).

According to an embodiment, the support plate 1340 may include a first portion 1345 and a second portion 1342.

For example, the support bar 1330 may be positioned at the bottom and the support plate 1340 may be positioned at the top. At least a portion of the first portion 1345 of the support plate 1340 may be disposed to overlap at least a portion of the first area 1335 of the support bar 1330.

For example, at least a portion of the second portion 1342 of the support plate 1340 may be disposed to overlap at least a portion of the second area 1332 of the support bar 1330.

For example, the second portion 1342 of the support plate 1340 may be disposed to overlap an edge portion of the rolling portion of the flexible display 1310. The second portion 1342 of the support plate 1340 may support an edge portion of the rolling portion of the flexible display 1310.

For example, a first surface (e.g., the surface on which the screen is displayed) of an edge portion of the rolling portion of the flexible display 1310 may overlap a second portion 1342 of the support plate 1340 and be fixed by the second portion 1342 of the support plate 1340.

For example, a second surface (e.g., the opposite surface of the first surface) of the edge portion of the rolling portion of the flexible display 1310 may overlap a second area of the support bar 1330 (e.g., the second area 1332 of FIG. 17) and may be fixed to the second area 1332 of the support bar 1330.

For example, the support bar 1330 may include a third area (e.g., the third area 1333 of FIG. 17) extending from both ends of the second area 1332. For example, the third area 1333 of the support bar 1330 may include a protrusion (e.g., the protrusion 1334 of FIG. 17).

For example, the support plate 1340 may include a third portion (e.g., third portion 1343 of FIG. 17) extending in a perpendicular direction from both ends of the second portion 1342. The third portion 1343 of the support plate 1340 may have a slit (e.g., the slit 1344 of FIG. 17) formed in the third portion 1343.

For example, a protrusion 1334 formed in a third area 1333 of the support bar 1330 may be inserted into a slit 1344 to be formed in a third portion 1343 of the support plate 1340.

A protrusion 1334 formed in the third area 1333 of the support bar 1330 may be inserted into a slit 1344 to be formed in the third portion 1343 of the support plate 1340, so that the support plate 1340 may be fixed (e.g., fastened) to the support bar 1330.

According to an embodiment, a display support sheet 2160 (e.g., a lattice sheet, a lattice plate, a metal sheet, a metal plate) may be disposed on a rear surface of the flexible display 2130 to support the flexible display 2130. For example, the flexible display 2130 may include a first area (e.g., a flat portion) and a second area (e.g., a rolling portion, a bending portion). The display support sheet 2160 may be disposed on a lower portion of the second area (e.g., the rolling portion, the bending portion) to support the second area (e.g., the rolling portion, the bending portion) of the flexible display 2130.

For example, the display support sheet 2160 may include a first portion overlapping the flexible display 2130, and a second portion 2165 extending from the first portion. The second portion 2165 of the display support sheet 2160 may extend a length L in the y-axis direction (e.g., the length direction of the flexible display). For example, the length L along which the second portion 2165 of the display support sheet 2160 extends may extend longer than the thickness of the flexible display 2130.

According to an embodiment, for example, at least a portion of the second portion 2165 of the display support sheet 2160 may overlap a portion of the support plate 1340. At least a portion of the second portion 2165 of the display support sheet 2160 may overlap at least a portion of the second portion 1342 of the support plate 1340.

For example, the second portion 2165 of the display support sheet 2160 may be bent toward the front of the flexible display 2130 and positioned to overlap the upper surface of the second portion 1342 of the support plate 1340.

An adhesive member 2350 (e.g., a pressure sensitive adhesive (PSA)) may be disposed between the second portion 2165 of the display support sheet 2160 and the second portion 1342 of the support plate 1340. For example, the second portion 2165 of the display support sheet 2160 may be fixed (e.g., attached) to the upper surface of the second portion 1342 of the support plate 1340 by the adhesive member 2350.

An electronic device 1300 and 1900 according to an embodiment of the present disclosure may include: a housing including a first housing part 1910 and a second housing part 1920 slidably disposed with respect to the first housing part 1910; a flexible display 1310 and 1940 at least a portion of which can slide into an inner side of the housing or slide out of an inner side of the housing according to sliding of the first housing part 1910; a display support sheet 1370 and 2160 disposed on a rear side of the flexible display 1310 and 1940; a support bar 1330 coupling with at least a portion of a first surface of an edge portion of the flexible display 1310 and 1940 in an inner side of the housing, and supporting the edge portion; and a plate 1340, a first portion 1345 of which is coupled to the support bar 1330, and a second portion 1342 of which is coupled to at least a portion of a second surface opposite to the first surface of the edge portion of the flexible display 1310 and 1940.

According to an embodiment, the second portion 1342 of the plate 1340 may support an edge of the flexible display 1310 and 1940.

According to an embodiment, the second portion 1342 of the plate 1340 may support an edge of the display support sheet.

According to an embodiment, the plate may include a third portion 1343 extending from the second portion 1342.

According to an embodiment, the support bar 1330 may include a first area 1335 that overlaps a first portion of the plate 1340, a second area 1332 that overlaps a second portion 1342 of the plate 1340, and a third area 1333 that extends from the second area 1332.

According to an embodiment, the support bar 1330 may include a protrusion 1334 protruding from the surface of the third area 1333 of the plate 1340. A slit 1344 may be formed in at least a portion of the third portion 1343 of the plate 1340. The protrusion 1334 may be inserted into and fixed to the slit 1344.

According to an embodiment, a first hole may be formed in a first area of the support bar 1330. A second hole 1346 may be formed in a first portion of the plate 1340 to overlap the first hole. A screw may be fastened to the first hole and the second hole 1346 and the support bar 1330 and the plate 1340 may be fixed.

According to an embodiment, the second portion 1342 of the plate 1340 and the edge of the flexible display 1310 and 1940 may overlap. A double-sided adhesive member may be disposed between the second portion 1342 of the plate 1340 and the edge of the flexible display 1310 and 1940 and fix the flexible display 1310 and 1940 and the plate 1340.

According to an embodiment, a portion of the support bar 1330 may be coupled to the flexible display 1310 and 1940, and the other portion may be coupled to the housing, or a frame included in the housing.

According to an embodiment, a belt (e.g., a tension belt 1320) connecting the second housing part and the support bar 1330 may be included.

An electronic device 1300 and 1900 according to an embodiment of the present disclosure may include: a housing including a first housing part 1910 and a second housing part 1920 slidably disposed with respect to the first housing part 1910; a flexible display 1310 and 1940 at least a portion of which can slide into an inner side of the housing or slide out of an inner side of the housing according to sliding of the first housing part 1910; a display support sheet 1370 and 2160 disposed on a rear side of the flexible display 1310 and 1940; a display support sheet 1370 and 2160 disposed on a rear side of the flexible display 1310 and 1940; a support bar 1330 that is coupled to at least a portion of a first surface of an edge portion of the flexible display 1310 and 1940 on an inner side of the housing; and a plate that is coupled to at least a portion of a second surface of the flexible display 1310 and 1940 opposite to the first surface of the edge portion.

According to an embodiment, at least a portion of the plate 1340 may support an edge of the flexible display 1310 and 1940. According to an embodiment, at least a portion of the plate 1340 may support an edge of the display support sheet.

According to an embodiment, at least a portion of the plate 1340 and an edge of the flexible display 1310 and 1940 may overlap. A double-sided adhesive member may be disposed between at least a portion of the plate 1340 and the edge of the flexible display 1310 and 1940 to fix the flexible display 1310 and 1940 and the plate 1340.

According to an embodiment, a portion of the support bar 1330 may be coupled to the flexible display 1310 and 1940, and the other portion may be coupled to the housing or to a frame included in the housing.

An electronic device 1300 and 1900 according to an embodiment of the present disclosure may include: a housing including a first housing part 1910 and a second housing part 1920 slidably disposed with respect to the first housing part 1910; a flexible display 1310 and 1940 at least a portion of which can slide into an inner side of the housing or slide out of an inner side of the housing according to sliding of the first housing part 1910; a display support sheet 1370 and 2160 disposed on a rear side of the flexible display 1310 and 1940; a display support sheet 1370 and 2160 disposed on a rear side of the flexible display 1310 and 1940; a support bar 1330 that fixes at least a portion of a first surface of an edge portion of the flexible display 1310 and 1940 on an inner side of the housing; and a plate a first portion of which is coupled to the support bar 1330 and a second portion of which is coupled to at least a portion of a second surface opposite to the first surface of the edge portion of the flexible display 1310 and 1940. The display support sheet 1370 and 2160 may include a first portion overlapping the flexible display 1310 and 1940, and a second portion extending from the first portion. The second portion of the display support sheet 1370 and 2160 may not overlap the flexible display 1310 and 1940, and at least a portion of the second portion of the support sheet may overlap at least a portion of the plate 1340.

According to an embodiment, the display support sheet 1370 and 2160 may include an adhesive member disposed between the second portion of the display support sheet 1370 and 2160 and the second portion 1342 of the plate 1340. By the adhesive member, the second portion of the display support sheet 1370 and 2160 may be fixed to the second portion 1342 of the plate 1340.

According to an embodiment, the length of the second portion of the display support sheet 1370 and 2160 may be formed to be longer than the thickness of the flexible display 1310 and 1940.

According to an embodiment, a second portion of the display support sheet 1370 and 2160 may be bent toward the front surface of the flexible display 1310 and 1940 and disposed to overlap a second portion 1342 of the plate 1340.

According to an embodiment, the display support sheet 1370 and 2160 may include an adhesive member disposed between the second portion of the display support sheet 1370 and 2160 and the second portion of the plate 1340. By the adhesive member, the second portion of the display support sheet 1370 and 2160 may be fixed to the second portion 1342 of the plate 1340.

An electronic device 1300, 1900 and 2100 according to an embodiment of the present disclosure includes: a housing including a first housing part 210 and 850 and a second housing part 220 and 860 slidably disposed with respect to the first housing part 210 and 850; a flexible display 1310 at least a portion of which can slide into an inner side of the housing or slide out of an inner side of the housing according to sliding of the second housing part 220 and 860; a support bar 1330 at least a portion of which supports an edge portion of the flexible display 1310 on an inner side of the housing; and a plate 1340, a first portion 1345 of which is coupled to the support bar 1330, and a second portion 1342 of which is coupled to at least a portion of the edge portion of the flexible display 1310.

According to an embodiment, the flexible display 1310 may include a support sheet 2160 disposed on the rear surface of the flexible display 1310 and formed with a plurality of slits.

According to an embodiment, the second housing part 220 and 860 may include a belt 1320 connecting at least one of the plate 1340 or the support bar 1330 with the second housing part 220 and 860.

According to an embodiment, the plate 1340 may include a third portion 1343 extending from the second portion 1342.

According to an embodiment, the support bar 1330 may include a first area 1335 that at least partially overlaps the first portion 1345 of the plate 1340. The support bar 1330 may include a second area 1332 that is coupled to the edge portion of the flexible display 1310. The support bar 1330 may include a third area 1333 that is coupled to the third portion 1343 of the plate 1340.

According to an embodiment, the support bar 1330 may include a protrusion 1334 protruding from the third area of the plate 1340. A slit 1344 may be formed in at least a portion of the third portion 1343 of the plate 1340. The protrusion 1334 may be inserted into the slits 1344.

According to an embodiment, a first hole may be formed in the first area 1335 of the support bar 1330. A second hole 1346 may be formed in the first portion 1345 of the plate 1340 to overlap the first hole. A screw may be fastened in the first hole and the second hole 1346 and fix the support bar and the plate.

According to an embodiment, an adhesive member may be disposed between the second portion 1342 of the plate 1340 and at least a portion of the edge portion of the flexible display 1310.

According to an embodiment, a portion of the support bar 1330 may be coupled to the flexible display 1310, and the other portion may be coupled to the housing or a frame included in the housing.

According to an embodiment, one side of the belt 1320 may be disposed adjacent to the second hole 1356 formed in the first portion 1345 of the plate 1340.

An electronic device 1300, 1900 and 2100 according to an embodiment of the present disclosure includes: a housing including a first housing part 210 and 850 and a second housing part 220 and 860 slidably disposed with respect to the first housing part 210 and 850; a flexible display 1310 at least a portion of which can slide into an inner side of the housing or slide out of an inner side of the housing according to sliding of the second housing part 220 and 860; a support bar 1330 at least a portion of which supports a rear surface of an edge portion of the flexible display 1310 on an inner side of the housing; and a plate 1340, at least a portion of which is opposite to the rear surface and is coupled to a front surface of at least a portion of the edge portion of the flexible display 1310.

According to an embodiment, at least a portion of the edge portion of the flexible display 1310 may be surrounded by the support bar 1330 and the plate 1340.

According to an embodiment, an adhesive member may be disposed between at least a portion of the plate 1340 and at least a portion of the first surface of the flexible display 1310.

According to an embodiment, a portion of the support bar 1330 may be coupled to the flexible display 1310, and the other portion may be coupled to the housing, or a frame included in the housing.

An electronic device 1300, 1900, 2100, and 2300) according to an embodiment of the present disclosure includes: a housing including a first housing part 210 and 850 and a second housing part 220 and 860 slidably disposed with respect to the first housing part 210 and 850; a flexible display 1310 at least a portion of which can slide into an inner side of the housing or slide out of an inner side of the housing according to sliding of the second housing part 220 and 860; a display support sheet 1370 and 2160 including a first portion 2162 disposed on a rear surface of the flexible display 1310 and a second portion 2165 extending from the first portion 2162 but at least partially bent toward a front surface of the flexible display 1310, which is an opposite surface of the rear surface; a support bar 1330 at least a portion of which supports an edge portion of the flexible display 1310 in an inner side of the housing; and a plate 1340 that is coupled to the support bar 1330 and at least a portion of the edge portion of the flexible display 1310. At least a portion of the second portion 2165 of the display support sheet 1370 and 2160 may be fixed to at least a portion of the plate 1340.

According to an embodiment, the length of the second portion 2165 of the display support sheet 1370 and 2160 may be formed to be longer than the thickness of the flexible display 1310.

According to an embodiment a manufacturing method for an electronic device comprises: providing a housing including a first housing part 210, 850 and a second housing part 220, 860 slidably disposed with respect to the first housing part 210, 850; providing a flexible display 1310 at least a portion of which is configured to slide into an inner side of the housing or slide out of an inner side of the housing according to sliding of the second housing part 220, 860; providing a support bar 1330 at least a portion 1332 of which supports an edge portion of the flexible display 1310 in the inner side of the housing; and providing a support plate 1340, a first portion 1345 of which is coupled to the support bar 1330, and a second portion 1342 of which is coupled to at least a portion of the edge portion of the flexible display 1310, wherein the support bar 1330 and the support plate 1340 support the edge portion on opposite surfaces of the flexible display 1310.

Two or more embodiments described above may be combined in order to form a new embodiment.

The electronic devices according to various embodiments of the present disclosure may prevent a flexible display (e.g., a rollable display) from lifting at an end (e.g., a longitudinal edge) of the flexible display.

## Claims

1. An electronic device comprising:
a housing including a first housing part (210, 850) and a second housing part (220, 860) slidably disposed with respect to the first housing part (210, 850);
a flexible display (1310) including a display area variable according to sliding of the second housing part (220, 860);
a support bar (1330),
at least a portion (1332) of which supports an edge portion of the flexible display (1310) in the first housing part (210, 850);
a support plate (1340), a first portion (1345) of which is coupled to the support bar (1330), and a second portion (1342) of which overlapping with the flexible display (1310), and
the edge portion of the flexible display (1310) is disposed between the support bar (1330) and the support plate (1340),
**characterized in that** the electronic device further comprises
a belt (1320) connecting the second housing part (220, 860) to at least one of the support plate (1340) or the support bar (1330),
wherein
the support plate (1340) comprises a third portion (1343) extending in a substantially perpendicular direction from the second portion (1342), and
the support bar (1330) comprises a first area (1335) at least partially overlapping with the first portion (1345) of the support plate (1340), a second area (1332) coupling with the edge portion of the flexible display (1310), and a third area (1333) extending in a substantially perpendicular direction from the second area (1332),
wherein the third portion (1343) of the support plate and the third area (1333) of the support bar are coupled to each other.

2. The electronic device of claim 1, comprising a support sheet (2160) disposed on a rear surface of the flexible display (1310), and having a plurality of slits formed therein.

3. The electronic device of one of claims 1 to 2, comprising a protrusion (1334) protruding from the third area of the support bar (1330), wherein a slit (1344) is formed in at least a portion of the third portion (1343) of the support plate (1340), and the protrusion (1334) is inserted into the slit (1344).

4. The electronic device of one of claims 1 to 3, wherein
a first hole is formed in the first area (1335) of the support bar (1330);
a second hole (1346) is formed in the first portion (1345) of the support plate (1340) to overlap the first hole; and
a screw is coupled in the first hole and the second hole (1346) and is configured to fix the support bar and the support plate (1340).

5. The electronic device of one of claims 1 to 4, wherein
an adhesive member is disposed between the second portion (1342) of the support plate (1340) and at least a portion of the edge portion of the flexible display (1310).

6. The electronic device of one of claims 1 to 5, wherein
a portion of the support bar (1330) is coupled to the flexible display (1310), and the other portion is coupled to the housing, or a frame included in the housing.

7. The electronic device of claim 4, wherein
a first side of the belt (1320) is disposed adjacent to the second hole (1356) formed in the first portion (1345) of the support plate (1340).

8. The electronic device of any one of claims 1 to 7, wherein
at least a portion of the edge portion of the flexible display (1310) is surrounded by the coupled support bar (1330) and the support plate (1340).

9. The electronic device of one of claims 1 and 8, wherein
an adhesive member is disposed between at least a portion of the support plate (1340) and at least a portion of the first surface of the flexible display (1310).

10. The electronic device of one of claims 1 to 9, further comprising:
a display support sheet (1370, 2160) comprising a first portion (2162) disposed on a rear surface of the flexible display (1310) and a second portion (2165) extending from the first portion (2162) but at least partially bent toward a front surface of the flexible display (1310), which is an opposite surface of the rear surface;
wherein at least a portion of the second portion (2165) of the display support sheet (1370, 2160) is fixed to at least a portion of the support plate (1340).

11. The electronic device of claim 10, wherein
a length of the second portion (2165) of the display support sheet (1370, 2160) is formed to be longer than a thickness of the flexible display (1310).

## Patentansprüche

1. Elektronische Vorrichtung, umfassend:
ein Gehäuse, das ein erstes Gehäuseteil (210, 850) und ein zweites Gehäuseteil (220, 860), das in Bezug auf das erste Gehäuseteil (210, 850) verschiebbar angeordnet ist, umfasst;
eine flexible Anzeige (1310) mit einem Anzeigebereich, der entsprechend der Verschiebung des zweiten Gehäuseteils (220, 860) variabel ist;
eine Stützstange (1330),
von der zumindest ein Abschnitt (1332) einen Randabschnitt der flexiblen Anzeige (1310) im ersten Gehäuseteil (210, 850) stützt;
eine Stützplatte (1340), deren erster Abschnitt (1345) mit der Stützstange (1330) gekoppelt ist und deren zweiter Abschnitt (1342) sich mit der flexiblen Anzeige (1310) überlappt, und
wobei der Randabschnitt der flexiblen Anzeige (1310) zwischen der Stützstange (1330) und der Stützplatte (1340) angeordnet ist,
**dadurch gekennzeichnet, dass** die elektronische Vorrichtung ferner Folgendes umfasst:
einen Riemen (1320), der das zweite Gehäuseteil (220, 860) mit mindestens einer von der Stützplatte (1340) und der Stützstange (1330) verbindet,
wobei
die Stützplatte (1340) einen dritten Abschnitt (1343) umfasst, der sich in einer im Wesentlichen senkrechten Richtung vom zweiten Abschnitt (1342) erstreckt, und
die Stützstange (1330) einen ersten Bereich (1335), der sich zumindest teilweise mit dem ersten Abschnitt (1345) der Stützplatte (1340) überlappt, einen zweiten Bereich (1332), der mit dem Randabschnitt der flexiblen Anzeige (1310) gekoppelt ist, und einen dritten Bereich (1333) umfasst, der sich in einer im Wesentlichen senkrechten Richtung vom zweiten Bereich (1332) erstreckt,
wobei der dritte Abschnitt (1343) der Stützplatte und der dritte Bereich (1333) der Stützstange miteinander gekoppelt sind.

2. Elektronische Vorrichtung nach Anspruch 1, umfassend ein Stützblech (2160), das auf einer Rückfläche der flexiblen Anzeige (1310) angeordnet ist und eine Vielzahl von darin ausgebildeten Schlitzen aufweist.

3. Elektronische Vorrichtung nach einem der Ansprüche 1 bis 2, umfassend einen Vorsprung (1334), der von dem dritten Bereich der Stützstange (1330) vorsteht, wobei in mindestens einem Abschnitt des dritten Abschnitts (1343) der Stützplatte (1340) ein Schlitz (1344) ausgebildet ist, und wobei der Vorsprung (1334) in den Schlitz (1344) eingeführt ist.

4. Elektronische Vorrichtung nach einem der Ansprüche 1 bis 3, wobei
ein erstes Loch im ersten Bereich (1335) der Stützstange (1330) ausgebildet ist;
ein zweites Loch (1346) im ersten Abschnitt (1345) der Stützplatte (1340) ausgebildet ist, um das erste Loch zu überlappen; und
eine Schraube in dem ersten Loch und dem zweiten Loch (1346) gekoppelt und dazu konfiguriert ist, die Stützstange und die Stützplatte (1340) zu fixieren.

5. Elektronische Vorrichtung nach einem der Ansprüche 1 bis 4, wobei
ein Klebeelement zwischen dem zweiten Abschnitt (1342) der Stützplatte (1340) und mindestens einem Abschnitt des Randabschnitts der flexiblen Anzeige (1310) angeordnet ist.

6. Elektronische Vorrichtung nach einem der Ansprüche 1 bis 5, wobei
ein Abschnitt der Stützstange (1330) mit der flexiblen Anzeige (1310) und der andere Abschnitt mit dem Gehäuse oder einem im Gehäuse enthaltenen Rahmen gekoppelt ist.

7. Elektronische Vorrichtung nach Anspruch 4, wobei
eine erste Seite des Riemens (1320) benachbart zu dem zweiten Loch (1356) angeordnet ist, das in dem ersten Abschnitt (1345) der Stützplatte (1340) ausgebildet ist.

8. Elektronische Vorrichtung nach einem der Ansprüche 1 bis 7, wobei
mindestens ein Abschnitt des Randabschnitts der flexiblen Anzeige (1310) von der gekoppelten Stützstange (1330) und der Stützplatte (1340) umgeben ist.

9. Elektronische Vorrichtung nach einem der Ansprüche 1 bis 8, wobei
ein Klebeelement zwischen mindestens einem Abschnitt der Stützplatte (1340) und mindestens einem Abschnitt der ersten Oberfläche der flexiblen Anzeige (1310) angeordnet ist.

10. Elektronische Vorrichtung nach einem der Ansprüche 1 bis 9, umfassend ferner:
ein Anzeige-Stützblech (1370, 2160), das einen ersten Abschnitt (2162), der auf einer Rückfläche der flexiblen Anzeige (1310) angeordnet ist, und einen zweiten Abschnitt (2165) umfasst, der sich vom ersten Abschnitt (2162) erstreckt, jedoch zumindest teilweise in Richtung einer Stirnfläche der flexiblen Anzeige (1310) gebogen ist, die eine der Rückfläche gegenüberliegende Oberfläche ist;
wobei mindestens ein Abschnitt des zweiten Abschnitts (2165) des Anzeige-Stützbleches (1370, 2160) an mindestens einem Abschnitt der Stützplatte (1340) fixiert ist.

11. Elektronische Vorrichtung nach Anspruch 10, wobei
eine Länge des zweiten Abschnitts (2165) des Anzeige-Stützbleches (1370, 2160) so ausgebildet ist, dass sie größer ist als eine Dicke der flexiblen Anzeige (1310).

## Revendications

1. Dispositif électronique comprenant :
un boîtier comprenant une première partie de boîtier (210, 850) et une seconde partie de boîtier (220, 860) disposée de manière coulissante par rapport à la première partie de boîtier (210, 850) ;
un affichage flexible (1310) comprenant une zone d'affichage variable en fonction du coulissement de la seconde partie de boîtier (220, 860) ;
une barre de support (1330),
dont au moins une portion (1332) supporte une portion de bord de l'affichage flexible (1310) dans la première partie de boîtier (210, 850) ;
une plaque de support (1340), dont une première portion (1345) est couplée à la barre de support (1330), et dont une deuxième portion (1342) chevauche l'affichage flexible (1310), et
la portion de bord de l'affichage flexible (1310) est disposée entre la barre de support (1330) et la plaque de support (1340),
**caractérisé en ce que** le dispositif électronique comprend en outre
une courroie (1320) reliant la seconde partie de boîtier (220, 860) à au moins l'une de la plaque de support (1340) ou de la barre de support (1330),
dans lequel
la plaque de support (1340) comprend une troisième portion (1343) s'étendant dans une direction sensiblement perpendiculaire à partir de la deuxième portion (1342), et
la barre de support (1330) comprend une première zone (1335) chevauchant au moins partiellement la première portion (1345) de la plaque de support (1340), une deuxième zone (1332) couplée avec la portion de bord de l'affichage flexible (1310), et une troisième zone (1333) s'étendant dans une direction sensiblement perpendiculaire à partir de la deuxième zone (1332),
dans lequel la troisième portion (1343) de la plaque de support et la troisième zone (1333) de la barre de support sont couplées l'une à l'autre.

2. Dispositif électronique selon la revendication 1, comprenant une feuille de support (2160) disposée sur une surface arrière de l'affichage flexible (1310), et comportant une pluralité de fentes formées dans celle-ci.

3. Dispositif électronique selon l'une quelconque des revendications 1 à 2, comprenant une saillie (1334) saillant depuis la troisième zone de la barre de support (1330), dans lequel une fente (1344) est formée dans au moins une portion de la troisième portion (1343) de la plaque de support (1340), et la saillie (1334) est insérée dans la fente (1344).

4. Dispositif électronique selon l'une quelconque des revendications 1 à 3, dans lequel
un premier trou est formé dans la première zone (1335) de la barre de support (1330) ;
un second trou (1346) est formé dans la première portion (1345) de la plaque de support (1340) de manière à chevaucher le premier trou ; et
une vis est couplée dans le premier trou et le second trou (1346) et est configurée pour fixer la barre de support et la plaque de support (1340).

5. Dispositif électronique selon l'une quelconque des revendications 1 à 4, dans lequel
un élément adhésif est disposé entre la deuxième portion (1342) de la plaque de support (1340) et au moins une portion de la portion de bord de l'affichage flexible (1310).

6. Dispositif électronique selon l'une quelconque des revendications 1 à 5, dans lequel
une portion de la barre de support (1330) est couplée à l'affichage flexible (1310), et l'autre portion est couplée au boîtier, ou à un cadre compris dans le boîtier.

7. Dispositif électronique selon la revendication 4, dans lequel
un premier côté de la courroie (1320) est disposé adjacent au second trou (1356) formé dans la première portion (1345) de la plaque de support (1340).

8. Dispositif électronique selon l'une quelconque des revendications 1 à 7, dans lequel
au moins une portion de la portion de bord de l'affichage flexible (1310) est entourée par la barre de support (1330) et la plaque de support (1340) couplées.

9. Dispositif électronique selon l'une quelconque des revendications 1 à 8, dans lequel
un élément adhésif est disposé entre au moins une portion de la plaque de support (1340) et au moins une portion de la première surface de l'affichage flexible (1310).

10. Dispositif électronique selon l'une quelconque des revendications 1 à 9, comprenant en outre :
une feuille de support d'affichage (1370, 2160) comprenant une première portion (2162) disposée sur une surface arrière de l'affichage flexible (1310) et une deuxième portion (2165) s'étendant à partir de la première portion (2162) mais étant au moins partiellement pliée vers une surface avant de l'affichage flexible (1310), qui est une surface opposée à la surface arrière ;
dans lequel au moins une portion de la deuxième portion (2165) de la feuille de support d'affichage (1370, 2160) est fixée à au moins une portion de la plaque de support (1340).

11. Dispositif électronique selon la revendication 10, dans lequel
une longueur de la deuxième portion (2165) de la feuille de support d'affichage (1370, 2160) est formée pour être supérieure à une épaisseur de l'affichage flexible (1310).
